(19) Europäisches Patentamt
European Patent Office
Office européen des brevets

(11) **EP 4 393 963 A1**

(12) **EUROPEAN PATENT APPLICATION**

(43) Date of publication:
**03.07.2024   Bulletin 2024/27**

(21) Application number: **22307078.0**

(22) Date of filing: **31.12.2022**

(51) International Patent Classification (IPC):
**C08F 6/00** (2006.01)       **C08F 6/02** (2006.01)
**C08F 6/06** (2006.01)

(52) Cooperative Patent Classification (CPC):
(C-Sets available)
**C08F 6/008; C08F 6/02; C08F 6/06**       (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **ARKEMA FRANCE**
**92700 Colombes (FR)**

(72) Inventors:
• **REN, Kangtai**
**EXTON, 19341 (US)**

• **LI, Ling**
**EXTON, 19341 (US)**
• **HE, Yuhong**
**EXTON, 19341 (US)**
• **WOLF, William**
**19341, EXTON (US)**
• **KLANG, Jeff**
**EXTON, 19341 (US)**

(74) Representative: **Arkema Patent**
**Arkema France**
**DRD-DPI**
**420, rue d'Estienne d'Orves**
**92705 Colombes Cedex (FR)**

(54) **METHODS FOR PREPARING MULTISTAGE POLYMER PARTICLE COMPOSITIONS AND CURABLE FORMULATIONS FOR THREE-DIMENSIONAL PRINTING**

(57)     The invention relates to a method for preparing a multistage polymer particle composition for curable formulations comprising subjecting multistage polymer particles to a contaminant-reduction process that reduces a level of at least one contaminant species present in the multistage polymer particles, such as potassium, sodium, phosphorus, sulfur, or combinations thereof. The contaminant-reduction process may include washing the particles in water and optional acid or performing a solvent-exchange process including an organic solvent and optional acid. The multistage polymer particles include a core polymer, an inner shell polymer surrounding the core polymer, and an outer shell polymer surrounding the inner shell polymer. The compositions may be formulated into curable formulations for various applications such as 3D printing or used to prepare cured compositions from the curable formulations.

EP 4 393 963 A1

(52) Cooperative Patent Classification (CPC): (Cont.)

C-Sets
**C08F 6/008, C08L 51/003;**
**C08F 6/02, C08L 51/003;**
**C08F 6/06, C08L 51/003**

**Description**

**TECHNICAL FIELD**

The present invention relates to methods for preparing a multistage polymer particle composition for curable formulations, to curable formulations including the multistage polymer particle compositions, and to methods of making a three-dimensional article using the curable formulations.

**BACKGROUND**

Multistage polymer particles and core/shell particles have been utilized in thermoset and UV or LED curable compositions as impact modifiers. Typically, a multistage polymer particle is made from a latex solution that contains at least one stage of elastomeric core and at least one stage of glassy polymeric shell. Various forms of multistage polymer particles are commercially available that have been produced from dry processes involving agglomeration by spray drying. The particles then are dispersed in a thermoset resin or in a UV-curable or LED-curable resins that may include a radical-polymerizable monomer/oligomer resin, a cationically- polymerizable monomer/oligomer, an anionically-polymerizable monomer/oligomer composition, or a mixture of at least two of these. The preparation of such dispersions usually requires a specialized mix equipment to prepare stable and homogenous dispersions without agglomeration, sedimentation, swelling, or damage to the multistage polymer that could significantly compromise performance of the final formulation.

In the field of 3-dimensional (3D) printing, UV or LED curable (meth)acrylate dispersions of multistage polymer particles usually are capable of being cured well, surviving any post washing and handling process, and providing sufficient mechanical strength for building an initial part with 3D printer. However, when a curable dispersion of multistage polymer is used in cationic curable resin or hybrid resin that contains both radical polymerizable resin and cationic polymerizable resin, cure speed is generally inconsistent when the multistage polymer particle dispersions are initially processed through the dry process involving agglomeration and spray drying.

Accordingly, ongoing needs exist for preparing multistage polymer particle compositions for cationically curable formulations and 3D printing formulations with consistent curing and mechanical characteristics suitable for application of the compositions in a 3D-printing process.

**SUMMARY**

A first object of the invention is a method for preparing a multistage polymer particle composition for curable formulations, the method comprising a step of subjecting multistage polymer particles to a contaminant-reduction process that reduces a level of at least one contaminant species present in the multistage polymer particles. The at least one contaminant species may be selected from potassium, sodium, phosphorus, sulfur, or combinations thereof. The method further comprises a step of combining the multistage polymer particles with a photocurable component during or after the contaminant-reduction process. The multistage polymer particles comprise a core polymer, an inner shell polymer surrounding the core polymer, and an outer shell polymer surrounding the inner shell polymer. The core polymer has a glass transition temperature of less than 10 °C. The inner shell polymer has a glass transition temperature of at least 60 °C. The outer shell polymer has a glass transition temperature of at least 30 °C.

Another object of the invention is a curable formulation comprising from 1% to 40% by weight multistage polymer particle composition prepared according to the method of the invention; from 5% to 99% by weight of at least one cationically curable monomer; a cationic photoinitiator; optionally, from 5% to 90% by weight of at least one (meth)acrylate monomer or oligomer; and optionally, at least one radical photoinitiator, wherein the percentages by weight are based on the weight of the curable formulation.

Another object of the invention is a method of making three-dimensional articles comprising printing a three-dimensional article using a curable formulation according to the invention in a layer-by-layer or continuous manner.

These and other features, aspects, and advantages will become better understood with reference to the following description and the appended claims.

Additional features and advantages of the embodiments described herein will be set forth in the detailed description that follows, and in part will be readily apparent to those skilled in the art from that description or recognized by practicing the embodiments described herein, including the detailed description and claims that follow.

It is to be understood that both the foregoing general description and the following detailed description describe various embodiments and are intended to provide an overview or framework for understanding the nature and character of the claimed subject matter.

## DETAILED DESCRIPTION

### Definitions

The term "substitution" herein means that at least one hydrogen atom (-H) bonded to a carbon atom or heteroatom of a corresponding unsubstituted compound or functional group is replaced by a substituent (e.g. $R^S$). Unless otherwise defined or limited in a specific context, a substituent group generally, or a substituent group referred to as $R^S$, may be any chemical moiety, typically, but not necessarily limited to, a chemical moiety having from 1 to 50, or from 1 to 40, or from 1 to 30, or from 1 to 20, or from 1 to 10 total atoms. Examples of substituent groups $R^S$ include, but are not limited to, a hydrocarbyl, a heterohydrocarbyl, an aryl, a heteroaryl, an alkyl, a cycloalkyl, a heteroatom, a carbonyl, a hydroxy, an ester, an ether, an amine, an amide, or a halide according to their respective definitions herein or their commonly understood meaning, any of which substituents themselves may be substituted or unsubstituted.

The term "hydrocarbyl" means a monovalent hydrocarbon, in which each hydrocarbon is aromatic or non-aromatic, saturated or unsaturated, straight chain or branched chain, cyclic (having three carbons or more, and including mono- and poly-cyclic, fused and non-fused polycyclic, and bicyclic) or acyclic, and substituted by one or more $R^S$, or unsubstituted. In this disclosure, hydrocarbyl may be an unsubstituted or substituted alkyl, an unsubstituted or substituted cycloalkyl, or an unsubstituted or substituted aryl.

The term "aryl" means an optionally substituted polyunsaturated aromatic group. The aryl may contain a single ring (i.e. phenyl) or more than one ring wherein at least one ring is aromatic. When the aryl comprises more than one more ring, the rings may be fused, linked via a covalent bond (for example biphenyl). The aromatic ring may optionally comprise one to two additional fused rings (i.e. cycloalkyl, heterocycloalkyl or heteroaryl). Examples include phenyl, naphthyl, biphenyl, phenanthrenyl and naphthacenyl.

The term "alkyl" means a monovalent saturated acyclic hydrocarbon group of formula $-C_nH_{2n+1}$ wherein n is 1 to 20. An alkyl may be linear or branched. Examples of alkyl groups include methyl, ethyl, propyl, isopropyl, butyl, isobutyl, tert-butyl, pentyl, hexyl, 2-methylbutyl, 2,2-dimethylpropyl, n-hexyl, 2-methylpentyl, 2,2-dimethylbutyl, n-heptyl, 2-ethylhexyl, and the like.

The term "cycloalkyl" means a monovalent saturated alicyclic hydrocarbon group comprising a cycle. Examples of cycloalkyl groups include cyclopentyl, cyclohexyl, and isobornyl, any of which may be substituted or unsubstituted.

The term "acrylate" refers to an acryloyloxy group having the general structure $(-O-C(=O)-CR=CH_2)$, where R may be hydrocarbyl, such as methyl, or hydrogen.

The term "methacrylate" means a methacryloyloxy group with formula $(-O-C(=O)-C(CH_3)=CH_2)$.

The term "(meth)acrylate" simultaneously encompasses both acrylates and methacrylates as two discrete options and, where feasible, as a combination. For example, any mention of "methyl (meth)acrylate" as a single example or embodiment is to be understood as mentioning both methyl acrylate and methyl methacrylate as separate examples or separate embodiments and a combination of methyl acrylate and methyl methacrylate where feasible.

The term "(meth)acrylate monomers or oligomers" refers to monomers or oligomers having at least one (meth)acrylate functional group.

The term "monofunctional" with respect to a monomer or oligomer refers to a monomer or oligomer having exactly one bond susceptible to polymerization.

The term "difunctional" with respect to a monomer or oligomer refers to a monomer or oligomer having exactly two bonds susceptible to polymerization.

The term "monomer" refers to a molecule with one or more polymerizable functional groups. The monomer has a single molecular weight, typically below 1000 g/mol, preferably 100 to 950 g/mol. As is recognized, commercial products of a particular monomer may contain impurities or other chemical species.

The term "oligomer" refers to molecules with a distribution of molecular weights and typically having one or more polymerizable functional groups. An oligomer may be the reaction product of two or more monomers and typically has a number averaged molecular weight greater than or equal to 500 g/mol, preferably 500 g/mol to 30,000 g/mol, more preferably 1,000 g/mol to 8,000 g/mol.

The term "residue" (also referred to herein as a polymerized product) shall mean the product of a reactant, such as the moiety remaining from a monomer after the monomer is polymerized to form a polymer, or from a polymer in a block copolymer when the polymer is one of the blocks of the block copolymer. For example, polystyrene is a polymer composed of styrene residues, where each individual styrene residue in the polystyrene is derived from reacting a vinyl olefin of a molecule of styrene (a styrene monomer) in a polymerization reaction.

The term "photoinitiator" refers to a compound that undergoes a photoreaction on absorption of light, producing reactive species. The reactive species that are generated then initiate curing (polymerization) of the reactive components of the curable formulation. Generally, when compounds present in the reactive components contain carbon-carbon double bonds, such polymerization (curing) involves reaction of such carbon-carbon double bonds.

The term "actinically-curable" means that when an actinically-curable formulation is exposed to actinic radiation, such as ultraviolet light, the actinically-curable formulation may polymerize.

The term "polymer powder" means a polymer in the form of a powder comprising powder grains in the range of at least 1 $\mu$m, obtained by agglomeration of primary polymer particles in the nanometer-size range and comprising polymer or polymers.

The term "primary particle" means a spherical polymer particles in the nanometer size range, typically from 20 nm to 800 nm.

The term "particle size" means the volume average diameter of a particle considered as spherical.

The "thermoplastic polymer" means a polymer that turns to a liquid or becomes more liquid or less viscous when heated and that can take on new shapes by the application of heat and pressure.

The term "thermosetting polymer" means a prepolymer in a soft, solid or viscous state that changes irreversibly into an infusible, insoluble polymer network by curing.

The term "copolymer" refers to a polymer that includes at least two different monomer residues.

The term "multistage polymer" means a polymer formed in sequential fashion by a multi-stage polymerization process. Preferred is a multi-stage emulsion polymerization process in which the first polymer is a first-stage polymer and the second polymer is a second-stage polymer, i.e., the second polymer is formed by emulsion polymerization in the presence of the first emulsion polymer, with at least two stages that are different in composition. Core-shell polymers are examples of multistage polymers.

The term "dry" means that the ratio of residual water is less than 1.5% by weight and preferably less than 1.2% by weight.

Ranges from x to y in the present disclosure include the upper and lower limits of the ranges, equivalent to "at least x and up to y."

The term "easily dispersed in liquid" with respect to a resin means a homogenous dispersion of an additive and the resin is obtained by customary mechanical means. The distribution of a polymeric composition is not homogenous if separation takes place after initial homogenization.

The terms "low polar" and "hydrophobic" herein are referred to with respect to a Hansen solubility parameter polarity component ($\delta_p$). Hansen solubility parameters reflect the physicochemical dissolution properties, also called capacities for solvation, of organic substances. Hansen solubility parameters can be calculated according to the approach proposed by Charles Hansen in the work with the title "Hansen Solubility Parameters: A user's handbook," Second Edition (2007) Boca Raton, Fla.: CRC Press. ISBN 978-0-8493-7248-3. According to this approach, three parameters, called "Hansen parameters": $\delta_d$, $\delta_p$, and $\delta_h$ are sufficient for predicting the behavior of a solvent with respect to a given molecule. The parameter $\delta_d$ in MPa$^{1/2}$, quantifies the energy of the forces of dispersion between the molecules, i.e., the van der Waals forces. The parameter $\delta_p$ in MPa$^{1/2}$, represents the energy of the intermolecular dipolar interactions. Finally, the parameter $\delta_h$ in MPa$^{1/2}$, quantifies the energy derived from the intermolecular hydrogen bonds, i.e., the capacity to interact via a hydrogen bond. The sum of the squares of the three parameters corresponds to the square of the Hildebrand solubility parameter ($\delta_{tot}$).

The term "glass transition temperature" or "$T_g$" refers to the temperature at which a material changes from a glassy state to a rubbery state. In this context, the term "glassy" means that the material is hard and brittle while the term "rubbery" means that the material is elastic and flexible. For polymeric materials, the $T_g$ is the critical temperature that separates their glassy and rubbery behaviors. If a polymeric material is at a temperature below its $T_g$, large-scale molecular motion is severely restricted because the material is essentially frozen. On the other hand, if the polymeric material is at a temperature above its $T_g$, molecular motion on the scale of its repeat unit takes place, allowing it to be soft or rubbery.

The glass transitions ($T_g$) of the polymers are measured by thermomechanical analysis. A RDAII "RHEOMETRICS DYNAMIC ANALYSER" proposed by the Rheometrics Company may be used. The thermomechanical analysis measures precisely the visco-elastics changes of a sample in function of the temperature, the strain or the deformation applied. The apparatus records continuously, the sample deformation, keeping the strain fixed (for example at 1 Hz), during a controlled program of temperature variation (for example using a temperature increase from -50°C to 300°C with a temperature gradient of 3°C per minute). The results are obtained by drawing, as a function of the temperature, the elastic modulus (G'), the loss modulus and the tan delta. The $T_g$ is highest temperature value read in the tan delta curve, when the derivative of tan delta is equal to zero.

Unless specified otherwise, molecular weights of polymers or oligomers herein refer to mass average molecular weight (Mw). The mass average molecular weight (Mw) of the polymers is measured with by size exclusion chromatography (SEC). Polystyrene standards are used for calibration. The polymer is dissolved in THF at a concentration of 1g/L. The chromatography column uses modified silica. The flow is 1 mL/minute, and a detector for refractive index is used.

The terms "mass fraction" and "weight fraction" are used herein interchangeably and are to be regarded as equivalent to each other with respect to embodiments or examples herein.

The term "wt.%" means weight percentage, which is equivalent to parts per hundred weight (pphw). Unless otherwise specified, weight percentages of a component of a compound or composition are expressed relative to the total weight of the compound or composition.

## Embodiments

Methods herein for preparing a multistage polymer particle composition for curable formulations include subjecting multistage polymer particles to a contaminant-reduction process that reduces a level of at least one contaminant species present in the multistage polymer particles; and combining the multistage polymer particles with a photocurable component during or after the contaminant-reduction process. The at least one contaminant species is selected from potassium ions, sodium ions, phosphorus ions, sulfur ions, or combinations thereof. The multistage polymer particles include a core polymer, an inner shell polymer surrounding the core polymer, and an outer shell polymer surrounding the inner shell polymer. The core polymer has a glass transition temperature of less than 10 °C. The inner shell polymer has a glass transition temperature of at least 60 °C. The outer shell polymer has a glass transition temperature of at least 30 °C.

The multistage polymer particles included in the methods for preparing multistage polymer particle compositions will now be described in detail. Subsequently, the various actions of the method itself will be described in detail.

## Multistage Polymer Particle Compositions

Methods herein for preparing multistage polymer particle compositions involve forming uniform or substantially homogeneous dispersions of multistage polymer particles in a photocurable component. Compositions prepared by the methods disclosed herein may be included as components of curable formulations, such as thermally curable formulations or photocurable formulations, by addition of an initiator to the compositions that enables polymerization or curing of the photocurable component contained in the composition. The curable formulations may include additional monomers, oligomers, and/or additives that are added to the composition, along with the initiator.

### Photocurable Component

The photocurable component comprises at least one photocurable monomer or oligomer. The photocurable component may comprise a mixture of photocurable monomers and/or oligomers. Non-limiting examples of photocurable monomers and oligomers include (meth)acrylate monomers, (meth)acrylate oligomers, ethylenically unsaturated compounds other than (meth)acrylates, oxetanes, epoxides, cationically polymerizable alcohols, cationically polymerizable vinyl ethers, and combinations thereof. In specific non-limiting examples, the photocurable monomer or oligomer may be chosen from (meth)acrylate monomers; (meth)acrylate oligomers such as epoxy (meth)acrylates, polyester (meth)acrylates, polyether (meth)acrylates, urethane (meth)acrylates, or (meth)acrylated poly(meth)acrylates; ethylenically unsaturated compounds other than (meth)acrylates such as unsaturated polyesters, polybutadienes, vinyl ethers or vinyl esters; and combinations thereof. In specific non-limiting examples, the photocurable component comprises, consists of or consists essentially of at least one photocurable monomer. In particular, the photocurable component may comprise, consist of or consist essentially of at least one (meth)acrylate monomer. More particularly, the photocurable component may comprise, consist of or consist essentially of at least one hydrophobic (meth)acrylate monomer.

The photocurable component may comprise a (meth)acrylate monomer. The photocurable component may comprise a mixture of (meth)acrylate monomers. The (meth)acrylate monomer may have 1 to 6 (meth)acrylate groups, in particular 1 to 3 (meth)acrylate groups. The (meth)acrylate monomer may comprise a mixture of (meth)acrylate monomers having different functionalities. For example, the (meth)acrylate monomer may comprise a mixture of a (meth)acrylate monomer containing a single acrylate or methacrylate group per molecule (referred to herein as "mono(meth)acrylate-functionalized monomer") and a (meth)acrylate monomer containing 2 or more, preferably 2 to 4, acrylate and/or methacrylate groups per molecule (referred to herein as "poly(meth)acrylate-functionalized monomer").

The (meth)acrylate monomer may comprise a mono(meth)acrylate-functionalized monomer. Non-limiting examples of suitable mono(meth)acrylate-functionalized monomers are mono(meth)acrylate esters of aliphatic monoalcohols (wherein the aliphatic monoalcohol may be straight chain, branched or alicyclic); mono-(meth)acrylate esters of aromatic alcohols (such as phenols, including alkyl phenols); mono-(meth)acrylate esters of alkylaryl alcohols (such as benzyl alcohol); mono(meth)acrylate esters of monoalkyl ethers of glycols and oligoglycols; mono-(meth)acrylate esters of alkoxylated (e.g., ethoxylated and/or propoxylated) aliphatic monoalcohols (wherein the aliphatic monoalcohol may be straight chain, branched or alicyclic); mono-(meth)acrylate esters of alkoxylated (e.g., ethoxylated and/or propoxylated) aromatic alcohols (such as alkoxylated phenols); and the like.

The following compounds are specific examples of mono(meth)acrylate-functionalized monomers suitable for use in the photocurable component: (meth)acrylic acid, methyl (meth)acrylate; ethyl (meth)acrylate; n-propyl (meth)acrylate; isopropyl (meth)acrylate; n-butyl (meth)acrylate; isobutyl (meth)acrylate; sec-butyl (meth)acrylate, tert-butyl (meth)acrylate; n-pentyl (meth)acrylate; 2-methylbutyl (meth)acrylate, neopentyl (meth)acrylate, n-hexyl (meth)acrylate;

2-ethylhexyl (meth)acrylate; n-octyl (meth)acrylate; isooctyl (meth)acrylate; n-nonyl (meth)acrylate; n-decyl (meth)acrylate; isodecyl (meth)acrylate; lauryl (meth)acrylate; tridecyl (meth)acrylate; tetradecyl (meth)acrylate; hexadecyl (meth)acrylate; octadecyl (meth)acrylate, behenyl (meth)acrylate, 2,2,3,3-tetrafluoropropyl (meth)acrylate, 2,2,2-trifluoroethyl (meth)acrylate, methyl cyanoacrylate, ethyl cyanoacrylate, butyl cyanoacrylate, 2-cyanoethyl (meth)acrylate, 2-cyanobutyl (meth)acrylate, 1-(dimethylamino)ethyl (meth)acrylate, 1-(diethylamino)ethyl (meth)acrylate; 2-carboxyethyl (meth)acrylate; 2-methoxyethyl (meth)acrylate; 2-ethoxyethyl (meth)acrylate; 2- and 3-ethoxypropyl (meth)acrylate; diethylene glycol monomethyl ether (meth)acrylate; diethylene glycol monoethyl ether (meth)acrylate; diethylene glycol monobutyl ether (meth)acrylate; triethylene glycol monoethyl ether (meth)acrylate; glycidyl (meth)acrylate, tetrahydrofurfuryl (meth)acrylate; cyclohexyl (meth)acrylate; tert-butylcyclohexyl (meth)acrylate; cyclic trimethylolpropane formal (meth)acrylate; isobornyl (meth)acrylate; adamantyl (meth)acrylate ; tricyclodecanemethanol mono(meth)acrylate; 3,3,5-trimethylcyclohexyl (meth)acrylate; (2,2-dimethyl-1,3-dioxolan-4-yl)methyl (meth)acrylate; (2-ethyl-2-methyl-1,3-dioxolan-4-yl)methyl (meth)acrylate; 1,3-dioxan-5-yl (meth)acrylate; (1,3-dioxolan-4-yl)methyl (meth)acrylate; glycerol carbonate (meth)acrylate; 3-(2-hydroxyalkyl)oxazolidinone (meth)acrylate, (meth)acryloyl morpholine; 2-phenoxyethyl (meth)acrylate, phenol (meth)acrylate; nonylphenol (meth)acrylate, benzyl (meth)acrylate; as well as the alkoxylated (i.e. ethoxylated and/or propoxylated) derivatives thereof; and combinations thereof.

The (meth)acrylate monomer may comprise a poly(meth)acrylate-functionalized monomer. Non-limiting examples of suitable poly(meth)acrylate-functionalized monomers include acrylate and methacrylate esters of polyols. Such polyols are fully esterified with a (meth)acrylating agent (such as (meth)acrylic acid, (meth)acrylic anhydride, (meth)acryloyl chloride or mixtures thereof) so that the resulting compound contains at least two (meth)acrylate functional groups per molecule and no residual hydroxyl groups. Examples of suitable polyols $P_{OH}$ are ethylene glycol, 1,2- or 1,3-propylene glycol, 1,2-, 1,3- or 1,4-butylene glycol, 1,5-pentanediol, 1,6-hexanediol, 1,7-heptanediol, 1,8-octanediol, 1,9-nonanediol, 1,10-decanediol, 1,12-dodecanediol, 2-methyl-1,3-propanediol, 2,2-diethyl-1,3-propanediol, 3-methyl-1,5-pentanediol, 3,3-dimethyl-1,5-pentanediol, neopentyl glycol, 2,4-diethyl-1,5-pentanediol, 3,3-butylethyl-1,5-pentane diol, cyclohexanediol, cyclohexanedimethanol, norbornene dimethanol, norbornane dimethanol, tricyclodecanediol, tricyclodecanedimethanol, dicyclopentadiene diol, hydroquinone bis(2-hydroxyethyl) ether, pyrocatechol, resorcinol, cardol, phloroglucinol, pyrogallol, tris(hydroxyphenyl)methane, tris(hydroxyphenyl)ethane, bisphenol A, B, F or S, hydrogenated bisphenol A, B, F or S, trimethylolmethane, trimethylolethane, trimethylolpropane, di(trimethylolpropane), triethylolpropane, pentaerythritol, di(pentaerythritol), glycerol, di-, tri- or tetraglycerol, di-, tri- or tetra(ethylene glycol), di-, tri- or tetra(1,2-propylene glycol), di-, tri- or tetra(1,3-propylene glycol), di-, tri- or tetra(1,4-butylene glycol), an alditol (i.e. erythritol, threitol, arabitol, xylitol, ribitol, mannitol, sorbitol, galactitol, fucitol or iditol), a dianhydrohexitol (i.e. isosorbide, isomannide, isoidide), tris(2-hydroxyethyl)isocyanurate, a hydroxylated vegetable oil, a C36 dimer diol, as well as the alkoxylated (e.g., ethoxylated and/or propoxylated) derivatives thereof, the amine-modified and sulfide-modified derivatives thereof, and the derivatives obtained by ring-opening polymerization of ε-caprolactone initiated with one of the aforementioned polyols, and combinations thereof.

The following compounds are specific examples of poly(meth)acrylate-functionalized monomers suitable for use in the photocurable component: bisphenol A di(meth)acrylate; hydrogenated bisphenol A di(meth)acrylate; ethylene glycol di(meth)acrylate; di-, tri- or tetra-ethylene glycol di(meth)acrylate; 1,2-propylene glycol di(meth)acrylate; di-, tri- or tetra(1,2-propylene glycol) di(meth)acrylate; 1,3-propylene glycol di(meth)acrylate; di-, tri- or tetra(1,3-propylene glycol) di(meth)acrylate, 1,2-butanediol di(meth)acrylate; 2,3-butanediol di(meth)acrylate; 1,3-butanediol di(meth)acrylate; 1,4-butanediol di(meth)acrylate; di-, tri- or tetra(1,4-butanediol) di(meth)acrylate 1,5-pentanediol di(meth)acrylate; 1,6-hexanediol di(meth)acrylate; 1,8-octanediol di(meth)acrylate; 1,9-nonanediol di(meth)acrylate; 1,10-nonanediol di(meth)acrylate; 1,12-dodecanediol di(meth)acrylate; neopentyl glycol di(meth)acrylate; 2-methyl-2,4-pentanediol di(meth)acrylate; cyclohexanedimethanol di(meth)acrylate; tricyclodecanedimethanol di(meth)acrylate; glyceryl tri(meth)acrylate; trimethylolethane tri(meth)acrylate; trimethylolpropane tri(meth)acrylate; pentaerythritol tetra(meth)acrylate, di(trimethylolpropane) tetraacrylate, sorbitol penta(meth)acrylate; di(pentaerythritol) hexa(meth)acrylate; tris (2-hydroxyethyl) isocyanurate tri(meth)acrylate, as well as the alkoxylated (e.g., ethoxylated and/or propoxylated) derivatives thereof, the amine-modified and sulfide-modified derivatives thereof, the derivatives obtained by ring-opening polymerization of ε-caprolactone initiated with one of the aforementioned polyols, and combinations thereof.

The photocurable component may comprise a (meth)acrylate oligomer. The photocurable component may comprise a mixture of (meth)acrylate oligomers. The (meth)acrylate oligomer may have 1 to 18 (meth)acrylate groups, in particular 2 to 6 (meth)acrylate groups, more particularly 2 to 6 acrylate groups. In particular, the (meth)acrylate oligomer may be selected from the group consisting of epoxy (meth)acrylates, polyester (meth)acrylates, polyether (meth)acrylates, urethane (meth)acrylates, (meth)acrylated poly(meth)acrylates and combinations thereof. In particular, the (meth)acrylate oligomer may be selected from the group consisting of epoxy (meth)acrylates, polyester (meth)acrylates, polyether (meth)acrylates, (meth)acrylated poly(meth)acrylates, including the amine-modified and sulfide-modified derivatives of the aforementioned compounds, and combinations thereof.

Non-limiting examples of epoxy (meth)acrylates are the reaction products of an epoxide (such as glycidyl ethers, glycidyl esters, cycloaliphatic epoxides or epoxides obtained by epoxidation of mono- and/or polyunsaturated compounds) with a (meth)acrylating agent (such as (meth)acrylic acid, (meth)acrylic anhydride, (meth)acryloyl chloride or combinations thereof). The epoxide may be selected from 1,2,3,4-diepoxybutane; 1,2,4,5-diepoxypentane; 1,2,5,6-diepoxyhexane; 1,2,7,8-diepoxyoctane; 1,2,9,10-diepoxydecane; bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolak resin, hydrogenated bisphenol A diglycidyl ether, hydrogenated bisphenol F diglycidyl ether, hydrogenated bisphenol S diglycidyl ether, 3,4-epoxycyclohexylmethyl-3',4'-epoxycyclohexanecarboxylate, 2-(3,4-epoxycyclohexyl-5,5-spiro-3,4-epoxy)cyclohexane-1,4-dioxane, bis(3,4-epoxycyclohexylmethyl)adipate, vinylcyclohexene oxide, 4-vinylepoxycyclohexane, bis(3,4-epoxy-6-methylcyclohexylmethyl)adipate,3,4-epoxy-6-methylcyclohexy 1-3',4'-epoxy-6'-methylcyclohexanecarboxylate, methylenebis(3,4-epoxycyclohexane), dicyclopentadiene diepoxide, di(3,4-epoxycyclohexylmethyl) ether of ethylene glycol, ethylenebis(3, 4-epoxycyclohexanecarboxylate), ethylene glycol diglycidyl ether, 1,2- or 1,3-propylene glycol diglycidyl ether, 1,2-, 1,3- or 1,4-butanediol diglycidyl ether, 1,5-pentanediol diglycidyl ether, 1,6-hexanediol diglycidyl ether, 1,7-hexanediol diglycidyl ether, 1,8-octanediol diglycidyl ether, 1,9-nonanediol diglycidyl ether, 1,10-decanediol diglycidyl ether, 1,12-dodecanediol diglycidyl ether, 2-methyl-1,3-propanediol diglycidyl ether, neopentyl glycol diglycidyl ether, 2,2-diethyl-1,3-propane diol diglycidyl ether, 3-methyl-1,5-pentanediol diglycidyl ether, 3,3-dimethyl-1,5-pentanediol diglycidyl ether, 2,4-diethyl-1,5-pentanediol diglycidyl ether, 3,3-butylethyl-1,5-pentane diol diglycidyl ether, di-, tri- or tetra(ethylene glycol) diglycidyl ether, di-, tri- or tetra(1,2-propylene glycol) diglycidyl ether, di-, tri- or tetra(1,3-propylene glycol) diglycidyl ether, di-, tri- or tetra(1,4-butylene glycol) diglycidyl ether, a polyethylene glycol) diglycidyl ether, a polypropylene glycol) diglycidyl ether, a poly(trimethylene glycol) diglycidyl ether, a poly(tetramethylene glycol) diglycidyl ether, a poly(ethylene glycol-co-propylene glycol) diglycidyl ether, glycerol triglycidyl ether, a polyglycerol polyglycidyl ether, trimethylolmethane triglycidyl ether, trimethylolethane triglycidyl ether, trimethylolpropane triglycidyl ether, di(trimethylolpropane) tetraglycidyl ether, pentaerythritol tetraglycidyl ether, diglycidyl cyclohexanedicarboxylate, cyclohexane diglycidyl ether, cyclohexane-1,4-dimethanol diglycidyl ether, tricyclodecane dimethanol diglycidyl ether, isosorbide diglycidyl ether, pyrocatechol diglycidyl ether, resorcinol diglycidyl ether, cardol diglycidyl ether, phloroglucinol triglycidyl ether, pyrogallol triglycidyl ether, tris(hydroxyphenyl)methane triglycidyl ether, tris(hydroxyphenyl)ethane triglycidyl ether, diglycidyl phthalate, diglycidyl terephthalate, diglycidyl isophthalate, polyglycidyl ethers of a polyether polyol obtained by the addition of one or more alkylene oxides to an aliphatic polyhydric alcohol such as ethylene glycol, propylene glycol, and glycerol, diglycidyl esters of aliphatic long-chain (C6-C22) dibasic acids, monoglycidyl ethers of aliphatic higher alcohols, monoglycidyl ethers of phenol, cresol, butyl phenol, or polyether alcohols obtained by the addition of alkylene oxide to these compounds, glycidyl esters of higher fatty acids, an epoxidized vegetable oil (such as epoxidized soybean oil and epoxidized linseed oil), epoxybutylstearic acid, epoxyoctylstearic acid, epoxidized polybutadiene, triglycidyl isocyanurate and the like.

Non-limiting examples of polyester (meth)acrylates are the reaction products of a hydroxyl group-terminated polyester polyol with a (meth)acrylating agent (such as (meth)acrylic acid, (meth)acrylic anhydride, (meth)acryloyl chloride or combinations thereof). The reaction process may be conducted such that a significant concentration of residual hydroxyl groups remain in the polyester (meth)acrylate or may be conducted such that all or essentially all of the hydroxyl groups of the polyester polyol have been (meth)acrylated. The polyester polyols can be made by polycondensation reactions of a polyhydroxyl functional component (in particular a diol) and a polycarboxylic acid functional compound (in particular, a dicarboxylic acid or anhydride). To prepare the polyester (meth)acrylates, the hydroxyl groups of the polyester polyol are then partially or fully esterified by reacting with the (meth)acrylating agent. Polyester (meth)acrylates may also be synthesized by reacting a hydroxyl-containing (meth)acrylate such as a hydroxyalkyl (meth)acrylate (e.g., hydroxyethyl acrylate) with a polycarboxylic acid. The polyhydroxyl functional and polycarboxylic acid functional components can each have linear, branched, cycloaliphatic or aromatic structures and can be used individually or as mixtures.

Non-limiting examples of polyether (meth)acrylates are the condensation reaction products of a polyetherol which is a polyether polyol with a (meth)acrylating agent (such as (meth)acrylic acid, (meth)acrylic anhydride, (meth)acryloyl chloride or combinations thereof). Suitable polyetherols can be linear or branched substances containing ether bonds and terminal hydroxyl groups. Polyetherols can be prepared by ring opening polymerization of epoxides and other oxygen-containing heterocyclic compounds (e.g., ethylene oxide, 1,2-propylene oxide, butene oxide, tetrahydrofuran and combinations thereof) with a starter molecule. Suitable starter molecules include water, hydroxyl functional materials, polyester polyols and amines. Polyetherols may also be obtained by the condensation of diols such as glycols.

Non-limiting examples of urethane (meth)acrylates are the condensation reaction products of at least one polyisocyanate (e.g., diisocyanate, triisocyanate), at least one polyol (such as a polyether polyol or a polyester polyol) and a hydroxyl-functionalized (meth)acrylate (such as 2-hydroxyethyl (meth)acrylate or 3-hydroxypropyl (meth)acrylate) to provide terminal (meth)acrylate groups. For example, the urethane (meth)acrylate may contain two, three, four or more (meth)acrylate groups per molecule. The order of addition of the components to prepare the urethane (meth)acrylate is well known in the art. For example, the hydroxyl-functionalized (meth)acrylate may be first reacted with the polyisocyanate to obtain an isocyanate-functionalized (meth)acrylate, which is then reacted with the polyol. In yet another embodiment, the polyisocyanate may be first reacted with the polyol to obtain an isocyanate-functionalized polyol, which is thereafter reacted with a hydroxyl-functionalized (meth)acrylate. Alternatively, all the components may be combined and reacted at the same time.

Non-limiting examples of (meth)acrylated poly(meth)acrylates are substances having an oligomeric (meth)acrylic backbone which is functionalized with one or (meth)acrylate groups (which may be at a terminus of the oligomer or pendant to the acrylic backbone). The (meth)acrylic backbone may be a homopolymer, random copolymer or block copolymer comprised of repeating units of (meth)acrylic monomers. The (meth)acrylic monomers may be any monomeric (meth)acrylate such as C1-C6 alkyl (meth)acrylates as well as functionalized (meth)acrylates such as (meth)acrylates bearing hydroxyl, carboxylic acid and/or epoxy groups. (Meth)acrylated poly(meth)acrylates may be prepared using any procedures known in the art, such as by oligomerizing (meth)acrylic monomers, at least a portion of which are functionalized with hydroxyl, carboxylic acid and/or epoxy groups (e.g., hydroxyalkyl(meth)acrylates, (meth)acrylic acid, glycidyl (meth)acrylate) to obtain a functionalized poly(meth)acrylate, which is then reacted with one or more (meth)acrylate-containing reactants to introduce the desired (meth)acrylate functional groups.

The photocurable component may comprise one or more ethylenically unsaturated compounds other than a (meth)acrylate-functionalized monomer or oligomer. Examples of such ethylenically unsaturated compounds include:

- polyvinylic and/or polyallylic monomers (in particular divinyl benzene, 1,4-butanediol divinyl ether, tri(ethylene glycol) divinyl ether, diallyl ether, glycerol diallyl ether, glycerol triallyl ether, trimethylolpropane diallyl ether, trimethylolpropane triallyl ether, pentaerythritol triallyl ether, pentaerythritol tetraallyl ether, diallyl phthalate, triallyl isocyanurate, 2,4,6-triallyloxy-1,3,5-triazine, glyoxal bis(diallyl acetal) and mixtures thereof);
- vinyl esters of carboxylic acids (in particular vinyl acetate, vinyl propionate, vinyl hexanoate, vinyl 2-ethylhexanoate, vinyl octanoate, vinyl pelargonate, vinyl laurate, vinyl stearate, a vinyl ester of versatic acid and mixtures thereof);
- vinyl ethers (in particular vinyl methyl ether, vinyl ethyl ether, vinyl n-butyl ether, vinyl iso-butyl ether and mixtures thereof, ethylene glycol divinyl ether, triethylene glycol divinyl ether and trimethylolpropane trivinyl ether);
- cycloaliphatic vinyl monomers (in particular vinylcyclohexane);
- olefins (in particular ethylene, propene, 1-butene, isobutylene, diisobutylene, 1-nonene, 1-decene and mixtures thereof);
- conjugated dienes (in particular butadiene, isoprene, pentadiene, chlorodiene and mixtures thereof);
- vinyl aromatic monomers (in particular styrene, alpha-methylstyrene, tert-butylstyrene, ortho-, meta-, and para-methylstyrene, ortho-, meta- and para-ethylstyrene, o-methyl-p-isopropylstyrene, p-chlorostyrene, p-bromostyrene, o,p-dichlorostyrene, o,p-dibromostyrene, ortho-, meta- and para-methoxystyrene, optionally substituted indenes, optionally substituted vinylnaphthalenes, acenaphthylene, diphenylethylene, vinyl anthracene and mixtures thereof);
- mono- or dicarboxylic acid monomers, cyclic anhydride monomers and salts thereof (in particular 3-butenoic acid, crotonic acid, vinyl acetic acid, fumaric acid, maleic acid, maleic anhydride, tetrahydrophthalic acid, tetrahydrophthalic anhydride, itaconic acid, mesaconic acid, citraconic acid, glutaconic acid, muconic acid and mixtures thereof);
- unsaturated polymers such as polybutadiene or unsaturated polyesters;
- as well as the alkoxylated (e.g., ethoxylated and/or propoxylated) derivatives thereof;
- and mixtures thereof.

The photocurable component may comprise an oxetane. The photocurable component may comprise a mixture of oxetanes. Non-limiting examples of oxetanes include oxetane itself and substituted derivatives thereof, provided the substituents do not interfere with the desired reaction/polymerization/curing of the oxetane. The substituent(s) may be, for example, alkyl groups, hydroxyalkyl groups, halo, haloalkyl groups, aryl groups, aralkyl groups and the like. The oxetane may be a mono-oxetane (a compound containing a single oxetane ring), a di-oxetane (a compound containing two oxetane rings), a tri-oxetane (a compound containing three oxetane rings) or an oxetane compound containing four or more oxetane rings.

Specific examples of suitable oxetanes include, but are not limited to, oxetane, trimethyolpropane oxetane, 3-ethyl-3-hydroxymethyl oxetane, 1,4-bis[(3-ethyl-3-oxetanylmethoxy)methyl]benzene, 3-ethyl-3-phenoxymethyl oxetane, bis[(1-ethyl(3-oxetanyl))methyl] ether, 3,3-bis (chloromethyl oxetane), 3,3-bis (iodomethyl) oxetane, 3,3-bis(methoxymethyl) oxetane, 3,3-bis(phenoxymethyl) oxetane, 3-methyl-3-chloromethyl oxetane, 3,3-bis(acetoxymethyl) oxetane, 3,3-bis (fluoromethyl) oxetane, 3,3-bis(bromomethyl) oxetane, 3,3-dimethyl oxetane, 3,3'-[1,4-phenylenebis(methyleneoxymethylene)]bis[3-ethyloxetane], 3-ethyl-3-[[(2-ethylhexyl)oxy]methyl]oxetane and the like and combinations thereof. Additional examples of suitable oxetanes are described in the following patent documents, the disclosures of each of which are incorporated herein by reference in its entirety for all purposes: U.S. Pat. Publication No. 2010/0222512 A1, U.S. Pat. Nos. 3,835,003, 5,750,590, 5,674,922, 5,981,616, 6,469,108 and 6,015,914. Suitable oxetanes are available from commercial sources, such as the oxetanes sold by the Toagosei Corporation under the tradenames OXT-221, OXT-121, OXT-101, OXT-212, OXT-211, CHOX, OX-SC and PNOX-1009.

The photocurable component may comprise an epoxide. The photocurable component may comprise a mixture of epoxides. Non-limiting examples of suitable epoxides are as described above for the preparation of epoxy (meth)acrylates.

The photocurable component may comprise a cationically polymerizable alcohol. The photocurable component may comprise a mixture of cationically polymerizable alcohols. Non-limiting examples of cationically polymerizable alcohols include hydroxy-functionalized compounds that contain one or more (meth)acrylate functional groups such as hydroxyalkyl (meth)acrylates (e.g., hydroxyethyl (meth)acrylate, 2- or 3-hydroxypropyl (meth)acrylate, 2-, 3- or 4-hydroxybutyl (meth)acrylate); alkyl glycidyl (meth)acrylates, aryl glycidyl (meth)acrylates and allyl glycidyl (meth)acrylates that have been ring-opened with hydroxyalkyl (meth)acrylates such as hydroxyethyl (meth)acrylate or hydroxypropyl (meth)acrylate; trimethylolpropane mono- and di-(meth)acrylates; pentaerythritol mono-, di-, and tri-(meth)acrylates; dipentaerythritol mono-, di-, tri-, tetra-, and penta-(meth)acrylates; glycerol mono- and di-(meth)acrylates; neopentyl glycol mono(meth)acrylate; alkylenediol mono(meth)acrylates such as hexanediol mono(meth)acrylate; tris(2-hydroxyethyl)isocyanurate mono- and di-(meth)acrylates; alkoxylated (e.g., ethoxylated or propoxylated) versions of all of the above; polyethylene glycol mono(meth)acrylates; polypropylene glycol mono(meth)acrylates; polyethylene/propylene glycol mono(meth)acrylates; polybutylene glycol mono(meth)acrylates; polytetramethylene glycol mono(meth)acrylates; polycaprolactone mono(meth)acrylates (i.e. compounds of formula $HO-[(CH_2)_5-C(=O)-O]_x-L-O-C(=O)-CR'=CH_2$ in which L is an alkylene or an oxyalkylene, R' is H or methyl, x is 1 to 20); and the like and combinations thereof. Examples of hydroxy-functionalized compounds that contain one or more allyl groups include allyl alcohol, propoxylated and/or ethoxylated allyl alcohols, cinnamyl alcohol, crotyl alcohol, 3-butene-1-ol, 3-butene-2-ol, linalool, 2-cyclohexen-1-ol, 2-cyclopenten-1-ol, 2-butene-1,4-diol, glycerol mono- and di-allyl ethers, trimethylolpropane mono- and di-allyl ethers, and the like.

Further examples of cationically polymerizable alcohols include polyols such as polymeric polyols and non-polymeric polyols. "Polymeric polyols" are polymers bearing two or more isocyanate-reactive hydroxyl groups per molecule. "Non-polymeric polyols" are non-polymeric compounds bearing two or more hydroxyl groups per molecule. Examples of non-polymeric polyols include ethylene glycol, diethylene glycol, triethylene glycol, and tetraethylene glycol. A polyethylene glycol containing five or more oxyalkylene repeating units is an example of a polymeric polyol.

In the polyols, preferably the hydroxyl groups are primary and/or secondary hydroxyl groups. In the case where the polyol is a polymeric polyol, the hydroxyl groups, may be positioned at terminal ends of the polymer. However, it is also possible for hydroxyl groups to be present along the backbone of the polymer or on side chains or groups pendant to the polymer backbone. The polymer portion of the polymeric polyol may be comprised of a plurality of repeating units such as oxyalkylene units, ester units, carbonate units, acrylic units, alkylene units or the like or combinations thereof.

In some examples, polymeric polyols may be represented by the formula HO-R-OH, where R is a polyether (e.g., polyoxyalkylene), polycarbonate, polydiene, polyorganosiloxane, or polyester chain or linker. Particularly preferred polymeric polyols include polyether diols and polyester diols. Suitable polyether diols include, for example, polytetramethylene glycols (hydroxyl-functionalized polymers of tetrahydrofuran) and polyethylene glycols (hydroxyl-functionalized polymers of ethylene oxide). Suitable polyester diols include, for example, poly(caprolactones), poly(lactides), poly(alkylene glycol adipates) and poly(alkylene glycol succinates). Other types of polymeric polyols potentially useful in the present invention include polycarbonate polyols, polyorganosiloxane polyols (e.g., polydimethylsiloxane diols or polyols), and polydiene polyols (e.g., polybutadiene diols or polyol, including fully or partially hydrogenated polydiene polyols).

The molecular weight of the polymeric polyol may be varied as may be needed or desired to achieve particular properties in the cured composition obtained by curing the curable composition. For example, the number average molecular weight of the polymeric polyol may be at least 300, at least 350, or at least 400 g/mol. In other embodiments, the polymeric polyol may have a number average molecular weight of 5000 g/mol or less, 4500 g/mol or less, or 4000 g/mol or less. For example, the polymeric polyol may have a number average molecular weight of 250 to 5000 g/mol, 300 to 4500 g/mol or 350 to 4000 g/mol.

Other types of suitable non-polymeric polyols include, but are not limited to, $C_2$-$C_{12}$ aliphatic polyols, diols, and oligomers thereof (containing up to four oxyalkylene repeating units). The aliphatic polyol or diol may be linear, branched or cyclic in structure, with the hydroxyl groups being both primary or both secondary or one or more of each type (one primary hydroxyl group and one secondary hydroxyl group, for example).

Examples of $C_2$-$C_{12}$ aliphatic diols as the photocurable component include, but are not limited to, ethylene glycol, 1,2-propylene glycol, 1,3-propanediol, 1,4-butanediol, 1,6-hexanediol, diethylene glycol, 2-methyl-1,3 propanediol, 3-methyl-1,5-pentanediol, 2,2-dimethyl-1,3-propanediol, 2,2,4-trimethyl 1,5-pentanediol, and 2-methyl-2-ethyl-1,3-propanediol, and oligomers thereof containing up to four oxyalkylene repeating units.

The aliphatic diol (linear, branched or containing a ring structure) may be ethylene glycol, 1,2-propanediol, 1,3-propanediol, 1,4-butanediol, neopentyl glycol, 2-ethyl-1,3-hexanediol, 1,3-butanediol, 2-butyl-2-ethyl-1,3-propanediol, 2,4-diethyl-1,5-pentanediol and the like and short chain oligomers thereof (containing up to four oxyalkylene repeating units. Typically, the hydroxyl groups in such aliphatic diols are primary or secondary hydroxyl groups, which will react readily with the diisocyanates used to make the inherently reactive urethane acrylate oligomers.

The polyol may selected from ethylene glycol, propylene glycol, 1,3-propanediol, 1,2, 1,3 or 1,4 butanediols, 2-methyl-1,3-propane diol (MPDiol), neopentyl glycol, alkoxylated derivatives of these, polyether diols, polyester diols, or polysiloxane diols and combinations thereof.

The photocurable component may comprise a cyclic ether compound, a cyclic lactone compound, a cyclic acetal compound, a cyclic thioether compounds, a spiro orthoester compounds or vinylether compound, for example.

The photocurable component may comprise a cationically polymerizable vinyl ether. Non-limiting examples of cationically polymerizable vinyl ethers as the photocurable component include hydroxy-functionalized compounds that contain one or more vinyl groups such as, for example, ethylene glycol vinyl ether, propylene glycol vinyl ether, 1,4-butanediol vinyl ether, 1,3-butanediol vinyl ether, 1,6-hexanediol vinyl ether, 2-methyl-1,3-propane diol vinyl ether, or di(ethylene glycol) vinyl ether, di(propylene glycol) vinyl ether.

In specific non-limiting examples of the multistage polymer particle compositions, the photocurable component comprises a (meth)acrylate monomer chosen from isobornyl (meth)acrylate, 3,3,5-trimethylcyclohexyl (meth)acrylate, tert-butyl cyclohexyl (meth)acrylate, tricyclodecanedimethanol di(meth)acrylate, cyclohexane dimethanol di(meth)acrylate, isodecyl (meth)acrylate, isooctyl (meth)acrylate, stearyl (meth)acrylate, 1,12-dodecanediol di(meth)acrylate, lauryl (meth)acrylate, tridecyl (meth)acrylate, octyl/decyl (meth)acrylate, caprolactone (meth)acrylate, neopentyl glycol di(meth)acrylate, or combinations thereof.

Multistage polymer particle compositions prepared by the methods herein include from 60% to 99% by weight photocurable component; and from 1% to 40% by weight multistage polymer particles dispersed in the photocurable component. Unless otherwise specified, the weight amounts of photocurable component and multistage polymer particles are based on the total weight of the multistage polymer particle compositions.

In some embodiments, the photocurable component may comprise, consist of or consist essentially of a hydrophobic (meth)acrylate monomer. As used herein, the term "hydrophobic (meth)acrylate monomer" refers to a (meth)acrylate monomer having a Hansen solubility parameter polarity component ($\delta_P$) less than 10.5 MPa$^{1/2}$. The hydrophobic (meth)acrylate monomer, therefore, may have a Hansen solubility parameter polarity component ($\delta_P$) less than 10 MPa$^{1/2}$, or less than 9.5 MPa$^{1/2}$, or less than 9 MPa$^{1/2}$, or less than 8.5 MPa$^{1/2}$, for example.

Non-limiting examples of hydrophobic (meth)acrylate monomers include cyclohexane dimethanol diacrylate; cyclohexane dimethanol dimethacrylate; 3,3,5-trimethylcyclohexyl acrylate; 3,3,5-trimethylcyclohexyl methacrylate; tert-butyl cyclohexyl acrylate; tert-butyl cyclohexyl methacrylate; tricyclodecanedimethanol diacrylate; tricyclodecanedimethanol dimethacrylate; isodecyl acrylate; isodecyl methacrylate; isooctyl acrylate; isooctyl methacrylate; stearyl acrylate; stearyl methacrylate; isobornyl acrylate; isobornyl methacrylate; 1,12-dodecanediol diacrylate; 1,12-dodecanediol dimethacrylate; lauryl acrylate; lauryl methacrylate; tridecyl acrylate; tridecyl methacrylate; octyl/decyl acrylate; octyl/decyl methacrylate; caprolactone acrylate; caprolactone methacrylate; neopentyl glycol diacrylate; neopentyl glycol dimethacrylate; or combinations thereof. A non-limiting, exemplary hydrophobic (meth)acrylate monomer that may be comprised in multistage polymer particle compositions prepared by the methods herein may include a tricyclodecanedimethanol diacrylate.

In some embodiments, the multistage polymer particle compositions prepared by the methods herein include from 60% to 99% by weight hydrophobic (meth)acrylate monomer having a Hansen solubility parameter polarity component $\delta_P$ less than 10.5 MPa$^{1/2}$; and from 1% to 40% by weight multistage polymer particles dispersed in the hydrophobic (meth)acrylate monomer.

In example embodiments, the multistage polymer particle compositions may include from 70% to 99% by weight, or from 75% to 99% by weight, or from 80% to 99% by weight, or from 85% to 99% by weight, or from 90% to 99% by weight, or from 60% to 95% by weight, or from 60% to 90% by weight, or from 60% to 85% by weight, or from 60% to 80%, or from 60% to 75% by weight, or from 60% to 70% by weight, or from 70% to 90% by weight, or from 70% to 85% by weight, or from 70% to 80% by weight, or from 80% to 95% by weight, or from 80% to 90% by weight, or from 90% to 95% by weight photocurable component, preferably a (meth)acrylate monomer or hydrophobic (meth)acrylate monomer, based on the total weight of the multistage polymer particle compositions.

Multistage Polymer Particles

The multistage polymer particles of the multistage polymer particle compositions have at least three layers configured as a core layer, an inner shell layer around the core layer, and an outer shell layer around the inner shell layer.

The core layer is composed of a rubbery polymer material. The core layer includes a core polymer having a glass transition temperature of less than 10 °C. In examples, the glass transition temperature Tg of the core polymer may be from -100 °C to less than 10 °C, or from -90°C to 0 °C, or from -80 °C to -10 °C, or from -70°C to -20 °C.

Non-limiting examples of core polymers are polymers composed of residues of monomers chosen from methyl acrylate, propyl acrylate, isopropyl acrylate, butyl acrylate, tert-butyl acrylate, methyl methacrylate, ethyl methacrylate, butyl methacrylate, isoprene, butadiene, or combinations of the foregoing. Further non-limiting examples of core polymers include polymers composed of residues of isoprene and butadiene in combination with a vinyl monomer residue chosen from styrene, alkylstyrene, acrylonitrile, or alkyl (meth)acrylate, where the vinyl monomer residue is up to 98 wt.% of the core polymer. A specific example of a core polymer is a homopolymer of butyl acrylate. Another specific example of a core polymer is a butadiene homopolymer.

In further non-limiting examples, the core polymer include at least 50 wt%, at least 60 wt.%, or at least 70 wt.% of polymeric units coming from alkyl acrylate or alkyl acrylates, based on the weight of the core polymer. The core polymer may include an acrylic monomer chosen from $C_1$ to $C_{18}$ alkyl acrylates or mixtures thereof. More preferably the core polymer may include a residue of an acrylic monomer chosen from monomers of $C_2$ to $C_{12}$ alkyl acrylic monomers or mixtures thereof. Still more preferably the acrylic monomer core polymer may include a residue of an acrylic monomer chosen from monomers of $C_2$ to $C_8$ alkyl acrylic monomers or mixtures thereof. The core polymer may include a comonomer or comonomers that are copolymerizable with the acrylic monomer, as long as core polymer has a glass transition temperature less than 10 °C. The monomer residues in the core polymer are preferably chosen from (meth)acrylic monomer residues, vinyl monomers residues or combinations thereof.

The inner shell layer is generally an intermediate layer of a material compatible to adhere well to the core layer and to which the outer shell adheres well. The inner shell layer includes an inner shell polymer surrounding the core polymer and having a glass transition temperature of at least 60 °C. In examples, the glass transition temperature $T_g$ of the inner shell polymer is from 60 °C to 150°C, or from 80 °C to 150 °C or from 90 °C to 150 °C, or from 100 °C to 150 °C.

In non-limiting examples, the inner shell polymer includes at least 50 wt% or at least 60 wt.% residues of methyl methacrylate, based on the weight of the inner shell polymer. Non-limiting examples of inner shell polymers include polymers composed of residues of methyl (meth)acrylate, methyl methacrylate, ethyl (meth)acrylate, ethyl methacrylate, butyl (meth)acrylate, butyl methacrylate, or combinations thereof. The inner shell polymer may be crosslinked, but need not be crosslinked.

The outer shell layer includes an outer shell polymer surrounding the inner shell polymer and having a glass transition temperature of at least 30 °C. Preferably the glass transition temperature of the outer shell polymer is from 30 °C to 150 °C or from 40 °C to 150°C, or from 45 °C to 150 °C, or from 50 °C to 150 °C. The outer shell layer may constitute from 5% to 30% by weight, or from 5% to 20% by weight of the total weight of the multistage polymer particle.

Non-limiting examples of outer shell polymers include polymers composed of residues of alkyl acrylates, alkyl methacrylates, cyclohexyl acrylate, cyclohexyl methacrylate, 4-tertbutyl cyclohexyl acrylate, 4-tertbutyl cyclohexyl methacrylate, bornyl acrylate, bornyl methacrylate, norbornyl acrylate, norbornyl methacrylate, isobornyl acrylate, isobornyl methacrylate, fenchyl acrylate, fenchyl methacrylate, dicyclopentanyl acrylate, dicyclopentanyl methacrylate, dicyclopentenyl acrylate, dicyclopentenyl methacrylate, adamantyl acrylate, adamantyl methacrylate, dimethyl adamantyl acrylate, dimethyl adamantyl methacrylate, cyclodecyl acrylate, cyclodecyl methacrylate, cyclodecyl acrylate, cyclodecyl methacrylate, or combinations thereof.

In some embodiments, outer shell layer includes an outer shell polymer that is a hydrophobic polymer that is a polymer comprising at least 50 wt.% or at least 60 wt.% (meth)acrylate monomer residues, based on the weight of the hydrophobic polymer.

In some embodiments, the outer shell layer includes an outer shell polymer that is a hydrophobic polymer that is a polymer comprising or consisting of monomer residues of at least one monomer having a Hansen solubility parameter polarity component $\delta_P$ less than 10.5 MPa$^{1/2}$. In principle, when the outer shell polymer is a hydrophobic polymer, the outer shell polymer functions as a hydrophobic modification to the combination of the core layer and the inner shell layer and thereby contributes to compatibilities of the multistage polymer particles with hydrophobic (meth)acrylate monomers that facilitate increased miscibility and dispersibility of the multistage polymer particles in the hydrophobic (meth)acrylate monomer.

Non-limiting examples of hydrophobic outer shell polymers include polymers composed of residues of cyclohexyl acrylate, cyclohexyl methacrylate, 4-tertbutyl cyclohexyl acrylate, 4-tertbutyl cyclohexyl methacrylate, bornyl acrylate, bornyl methacrylate, norbornyl acrylate, norbornyl methacrylate, isobornyl acrylate, isobornyl methacrylate, fenchyl acrylate, fenchyl methacrylate, dicyclopentanyl acrylate, dicyclopentanyl methacrylate, dicyclopentenyl acrylate, dicyclopentenyl methacrylate, adamantyl acrylate, adamantyl methacrylate, dimethyl adamantyl acrylate, dimethyl adamantyl methacrylate, cyclodecyl acrylate, cyclodecyl methacrylate, cyclodecyl acrylate, cyclodecyl methacrylate, or combinations thereof.

The outer shell polymer typically has a weight-average molecular weight from 10,000 g/mol to 500,000 g/mol, or from 15,000 g/mol to 450,000 g/mol, or from 16,000 g/mol to 400 000 g/mol, or from 17 000g/mol to 350 000g/mol, or from 18,000 g/mol to 300,000 g/mol, or from 19,000 g/mol to 250,000 g/mol, or from 20,000 g/mol to 200,000 g/mol.

The multistage polymer particles of multistage polymer particle compositions prepared by methods disclosed herein may have a weight average particle size from 15 nm to 900 nm. Preferably the weight average particle size of the polymer particle is from 20 nm to 800 nm, more preferably between, more preferably from 25 nm to 600 nm, still more preferably from 30 nm to 550 nm, again still more preferably from 35 nm to 500 nm, advantageously from 40 nm to 400 nm, even more advantageously from 75 nm to 350 nm and advantageously from 80 nm to 300 nm. If the particle size of the multistage polymer particle is greater than 900 nm, the resulting multistage polymer particle composition may not be a suitably uniform or homogeneous dispersion in the same manner as large particulate aggregates in a polymer dispersion are disadvantageous for further processing or polymerization reactions.

The multistage polymer particles of multistage polymer particle compositions prepared by methods disclosed herein may be powders having a volume median particle size D50 from 1 $\mu$m to 700 $\mu$m. Preferably the volume median particle size of the polymer powder is from 10 $\mu$m to 600 $\mu$m, more preferably from 15 $\mu$m to 550 $\mu$m and advantageously from 20 $\mu$m to 500 $\mu$m. The D10 of the particle size distribution in volume is at least 7 $\mu$m and preferably 10 $\mu$m, more preferably 15 $\mu$m. The D90 of the particle size distribution in volume is at most 1000 $\mu$m and preferably 950 $\mu$m, more preferably at most 900 $\mu$m and even more preferably at most 800 $\mu$m. The apparent bulk density of the multistage polymer particle powder is less than 0.60 g/cm$^3$. Preferably the apparent bulk density is less than 0.45 g/cm$^3$, more preferably less than 0.43 g/cm$^3$, and even more preferably less than 0.41 g/cm$^3$. The apparent bulk density of the multistage polymer particle powder is more than 0.1 g/cm$^3$. Preferably the apparent bulk density is more than 0.11 g/cm$^3$, more preferably is more than 0.12 g/cm$^3$, even more preferably more than 0.13 g/cm$^3$. The apparent bulk density of the multistage polymer particle powder is from 0.1 g/cm$^3$ to 0.60 g/cm$^3$. Preferably the apparent bulk density of the multistage polymer particle powder is from 0.15 g/cm$^3$ to 0.45 g/cm$^3$. Advantageously the apparent bulk density of the multistage polymer particle powder is from 0.2 g/cm$^3$ to 0.4 g/cm$^3$.

The multistage polymer particles of the multistage polymer particle compositions prepared by methods disclosed herein may be prepared by polymerizing by emulsion polymerization of a first monomer or monomer mixture to obtain the core layer; then polymerizing by emulsion polymerization of a second monomer or monomer mixture to obtain the inner core layer; then polymerizing by emulsion polymerization a third monomer or monomer mixture to obtain the outer shell layer.

The emulsion polymerization steps for preparing the individual layers may include emulsifying monomers or monomer mixtures in non-active ingredients such as emulsifiers or surfactants. The non-active ingredients may include, for example, beef tallow fatty acid potassium salts, mercaptans, p-menthane hydroperoxide, sodium tetrapyrophosphate, ferrous sulfate (FeSO$_4$), dextrose, sodium formaldehyde sulfoxylate, oleic acid, potassium hydroxide, octadecyl-3-(3,5-di-tertbutyl-4-hydroxyphenyl)propionate, ethylenediaminetetraacetic acid sodium salt, or other customary reagents. Owing to these non-active ingredients, the multistage polymer particles may include, in addition to the polymers, detectable levels of contaminant species such as iron, potassium, sodium, phosphorus, and/or sulfur. In some examples, the multistage polymer particle compositions may include at least one contaminant species is selected from potassium ions, sodium ions, phosphorus ions, sulfur ions, or combinations thereof.

In a specific non-limiting example of a multistage polymer particle of the multistage polymer particle compositions prepared by methods disclosed herein, the multistage polymer particles include a core polymer that is or includes a butadiene homopolymer or a butadiene copolymer; an inner shell polymer that is or includes a copolymer of methyl methacrylate and divinyl benzene; and an outer shell polymer that is or includes methyl methacrylate having a Hansen solubility parameter polarity component $\delta_P$ greater than 10.5 MPa$^{1/2}$. With these exemplary particles, when the photocurable component has a Hansen solubility parameter polarity component $\delta_P$ less than 10.5 MPa$^{1/2}$, the multistage polymer particle composition may include from 80% to 99% by weight of a photocurable component, preferably a hydrophobic (meth)acrylate monomer, and from 1% to 20% by weight of multistage polymer particles dispersed in the photocurable component, preferably the hydrophobic (meth)acrylate monomer.

In a specific non-limiting example of a multistage polymer particle of the multistage polymer particle compositions prepared by methods disclosed herein, the multistage polymer particles include a core polymer that is or includes a butadiene homopolymer or a butadiene copolymer; an inner shell polymer that is or includes a copolymer of methyl methacrylate and divinyl benzene; and an hydrophobic outer shell polymer that is or includes isobornyl methacrylate. With these exemplary multistage polymer particles, the multistage polymer particle composition may include from 60% to 99% by weight of a photocurable component, preferably a hydrophobic (meth)acrylate monomer having a Hansen solubility parameter polarity component $\delta_P$ less than 10.5 MPa$^{1/2}$, and from 1% to 40% by weight multistage polymer particles dispersed in the photocurable component, preferably the hydrophobic (meth)acrylate monomer.

In non-limiting specific examples of multistage polymer particle compositions prepared by methods disclosed herein, the outer shell polymer comprises monomer residues of at least one monomer having a Hansen solubility parameter polarity component $\delta_P$ less than 10.5 MPa$^{1/2}$; and the photocurable component is a hydrophobic (meth)acrylate monomer having a Hansen solubility parameter polarity component $\delta_P$ less than 10.5 MPa$^{1/2}$.

In a very specific example, the multistage polymer particle composition may include the core polymer is or includes a butadiene homopolymer or a butadiene copolymer; the inner shell polymer is or includes a copolymer of methyl methacrylate and divinyl benzene; the outer shell polymer is or includes isobornyl methacrylate; and the photocurable component is a hydrophobic (meth)acrylate monomer that is or includes a tricyclodecanedimethanol diacrylate.

In example embodiments, the multistage polymer particle compositions may include from 1% to 40% by weight, or from 1% to 30% by weight, or from 1% to 25% by weight, or from 1% to 20% by weight, or from 1% to 15% by weight, or from 1% to 10% by weight, or from 5% to 40% by weight, or from 10% to 40% by weight, or from 15% to 40% by weight, or from 20% to 40%, or from 25% to 40% by weight, or from 30% to 40% by weight, or from 10% to 30% by weight, or from 15% to 30% by weight, or from 20% to 30% by weight, or from 5% to 20% by weight, or from 10% to 20% by weight, or from 5% to 10% by weight multistage polymer particles, based on the total weight of the multistage polymer particle compositions.

In example embodiments, when the outer shell polymer of the multistage polymer particles has a Hansen solubility parameter polarity component $\delta_P$ less than 10.5 MPa$^{1/2}$ and the photocurable component also has a Hansen solubility parameter polarity component $\delta_P$ less than 10.5 MPa$^{1/2}$, the multistage polymer particle composition may include up to 40% by weight, or from 1% to 40% by weight multistage polymer particles, based on the total weight of the multistage polymer particle composition.

In further example embodiments, when the outer shell polymer of the multistage polymer particles has a Hansen solubility parameter polarity component $\delta_P$ greater than 10.5 MPa$^{1/2}$ while the photocurable component has a Hansen solubility parameter polarity component $\delta_P$ less than 10.5 MPa$^{1/2}$, the multistage polymer particle composition may include up to 20% by weight, or from 1% to 20% by weight multistage polymer particles, based on the total weight of the multistage polymer particle composition.

In non-limiting specific examples of multistage polymer particle compositions prepared by methods disclosed herein, the outer shell polymer comprises monomer residues of monomers having a Hansen solubility parameter polarity component $\delta_P$ less than 10.5 MPa$^{1/2}$; the photocurable component is a hydrophobic (meth)acrylate monomer having a Hansen solubility parameter polarity component $\delta_P$ less than 10.5 MPa$^{1/2}$; and the multistage polymer particle composition comprises from 60% to 99% by weight hydrophobic (meth)acrylate monomer having a Hansen solubility parameter polarity component $\delta_P$ less than 10.5 MPa$^{1/2}$ and from 1% to 40% by weight multistage polymer particles dispersed in the hydrophobic (meth)acrylate monomer, based on the total weight of the multistage polymer particle composition.

In non-limiting specific examples of multistage polymer particle compositions prepared by methods disclosed herein, the outer shell polymer comprises monomer residues of monomers having a Hansen solubility parameter polarity component $\delta_P$ greater than 10.5 MPa$^{1/2}$; the photocurable component is a hydrophobic (meth)acrylate monomer having a Hansen solubility parameter polarity component $\delta_P$ less than 10.5 MPa$^{1/2}$; and the multistage polymer particle composition comprises from 80% to 99% by weight hydrophobic (meth)acrylate monomer having a Hansen solubility parameter polarity component $\delta_P$ less than 10.5 MPa$^{1/2}$ and from 1% to 20% by weight multistage polymer particles dispersed in the hydrophobic (meth)acrylate monomer, based on the total weight of the multistage polymer particle composition.

The photocurable component and the multistage polymer particles may constitute the entire weight of the multistage polymer particle composition or may be constitute only a portion of the multistage polymer particle composition in addition to a solvent, such as water, and optionally one or more additives incapable of initiating polymerization of the multistage polymer particle composition. In embodiments, the multistage polymer particle composition is not polymerizable on its own by any customary polymerization method, unless and until an initiator or other polymerization catalyst is added to the multistage polymer particle composition.

The multistage polymer particle compositions prepared by methods disclosed herein typically have a viscosity from 100 cP to 200,000 cP or from 1000 cP to 15,000 cP.

## Method for Preparing Multistage Polymer Particle Compositions

Having described the multistage polymer particle compositions to be prepared, methods for preparing the multistage polymer particle compositions now will be described.

The multistage polymer particle compositions, as previously described, are prepared by a method that includes subjecting multistage polymer particles to a contaminant-reduction process that reduces a level of at least one contaminant species present in the multistage polymer particles. The multistage polymer particles are combined with a photocurable component during or after the contaminant-reduction process. The contaminant species may be any impurity-particularly an ionic impurity-that adversely affects the curing consistency of a curable formulation containing the multistage polymer particle composition in combination with at least one polymerizable monomer or oligomer, particularly a cationically curable formulation. In non-limiting examples, the contaminant species may include potassium ions, sodium ions, phosphorus ions, sulfur ions, or combinations thereof.

In example multistage polymer particle composition, the multistage polymer particles may have contents of ionic contaminants. The ionic contaminants may be residual from the manner by which the multistage polymer particles were prepared. In examples, the total amount of contaminant species in the multistage polymer particles may be in the range of 5 parts per million (ppm) to 1500 ppm, with contents of individual ions such as potassium, sodium, and/or phosphorus being each in the range of 5 ppm to 200 ppm or 5 ppm to 100 ppm. The multistage polymer particles may have sulfur ion contents in the range of 200 ppm to 2000 ppm, or 500 ppm to 2000 ppm, or 500 ppm to 1500 ppm, or 500 ppm to 1200 ppm. It should be understood that these ranges are presented as examples only and that total contaminant concentrations may be less than 5 ppm or greater than 1500 ppm, that the ranges for potassium, sodium, and phosphorus may be less than 5 ppm or greater than 200 ppm, and that the ranges for sulfur may be less than 200 ppm or greater than 2000 ppm. The contaminant contents of the multistage polymer particles may be measured or determined by common elemental analysis techniques known in the art such as inductively coupled plasma (ICP), or an X-ray fluorescence semi-quantitative analysis, for example.

According to embodiments, methods herein for preparing a multistage polymer particle composition for curable formulations or curable compositions include subjecting multistage polymer particles as previously described herein to a contaminant-reduction process that reduces a level of at least one contaminant species present in the multistage polymer particles; and combining the multistage polymer particles with a photocurable component during or after the contaminant-reduction process. The processes according to methods herein produce a dispersion of the multistage polymer particles in the photocurable component that results from combining the photocurable component and the multistage polymer particles.

Contaminant-Reduction Process

To reduce or remove the contaminant species from the multistage polymer particles, the multistage polymer particles are subjected to the contaminant-reduction process. Multiple embodiments of contaminant-reduction processes are contemplated. In some embodiments, the contaminant-reduction process is a "dry process," so called because the photocurable component is combined with washed and subsequently dried multistage polymer particles. In the dry process embodiments of the contaminant-reduction process, the multistage polymer particles are washed at least once, preferably twice or three times, in deionized water and then dried the particles prior to combination with the photocurable component. In other embodiments, the contaminant-reduction process is a "wet process," so-called because photocurable component is combined with to multistage polymer particles in a wet solution. The wet process is alternatively considered as a "solvent-exchange process," because an aqueous or water solvent is exchanged for an organic solvent having partial miscibility in water during the process. In the wet process or solvent-exchange process, the contaminant-reduction process includes contacting the multistage polymer particles with an organic acid or an inorganic acid that is added to an aqueous dispersion of the multistage polymer particles that includes water and an organic solvent. The multistage polymer particle compositions prepared from the methods that include the contaminant-reduction process, when combined with a photoinitiator and a cationically-curable monomer, have been found to provide curable formulations that exhibit mechanical and electrical properties to equivalent formulations prepared from multistage polymer particles that have not been subjected to any contaminant-reduction process.

Whether the contaminant-reduction process is a dry process or a wet process as previously described, the contaminant-reduction process reduces a level of at least one contaminant species present in the multistage polymer particles, as determined by an elemental analysis technique, from an initial level of contaminant species before the contaminant-reduction process to a final level of contaminant species after the contaminant-reduction process.

In examples, the multistage polymer particles in the multistage polymer particle composition after the contaminant-reduction process may have a final potassium content less than 90%, or less than 80%, or less than 70%, or less than 60%, or less than 50%, or less than 40%, or less than 30%, or less than 20%, or less than 10%, or less than 5%, or less than 1%, of the potassium content of the multistage polymer particles before the contaminant-reduction process. The potassium typically may be present multistage polymer particles as a contaminant species as potassium ions.

In examples, the multistage polymer particles in the multistage polymer particle composition after the contaminant-reduction process may have a final sodium content less than 90%, or less than 80%, or less than 70%, or less than 60%, or less than 50%, or less than 40%, or less than 30%, or less than 20%, or less than 10%, or less than 5%, or less than 1%, of the sodium content of the multistage polymer particles before the contaminant-reduction process. The sodium typically may be present multistage polymer particles as a contaminant species as sodium ions.

In examples, the multistage polymer particles in the multistage polymer particle composition after the contaminant-reduction process may have a final phosphorus content less than 90%, or less than 80%, or less than 70%, or less than 60%, or less than 50%, or less than 40%, or less than 30%, or less than 20%, or less than 10%, or less than 5%, or less than 1%, of the phosphorus content of the multistage polymer particles before the contaminant-reduction process. The phosphorus may be present multistage polymer particles as a contaminant species in ionic form, as phosphorus ions, or in a non-ionic or covalently bound form.

In examples, the multistage polymer particles in the multistage polymer particle composition after the contaminant-reduction process may have a final sulfur content less than 90%, or less than 80%, or less than 70%, or less than 60%, or less than 50%, or less than 40%, or less than 30%, or less than 20%, or less than 10%, or less than 5%, or less than 1%, of the sulfur content of the multistage polymer particles before the contaminant-reduction process. The sulfur may be present in the multistage polymer particles as a contaminant species in ionic form, as sulfur ions, or in a non-ionic or covalently bound form.

In further examples, any two, any three, or all four of the final contents of potassium, sodium, phosphorus, or sulfur may be reduced relative to the respective initial contents of potassium, sodium, phosphorus, or sulfur by any of the ranges described for the respective individual contaminant species.

In embodiments of the methods for preparing the multistage polymer particle compositions involving a dry process as the contaminant-reduction process, the contaminant-reduction process may comprise the following steps:

(a) wetting the multistage polymer particles to obtain an aqueous medium, the aqueous medium comprising deionized water and, optionally, an organic or inorganic acid;

(b) mixing the aqueous medium;

(c) allowing the aqueous medium to separate into a liquid phase and a solid phase;

(d) removing a portion of the liquid phase from the aqueous medium to obtain an aqueous slurry of the multistage polymer particles;

(e) repeating steps (a), (b), (c), and (d) at least once; and

(f) drying the aqueous slurry to obtain multistage polymer particles having a reduced level of the at least one contaminant species.

In the embodiments of the dry process, the washed multistage polymer particles having a reduced level of the at least one contaminant species are combined with the photocurable component after drying the aqueous slurry in (f), to obtain the multistage polymer particle composition.

In step (a) of the dry process, an amount of deionized water, or an amount of deionized water and an optional organic or inorganic acid, sufficient to fully wet the multistage polymer particles. The optional acid of step (a) may be chosen from inorganic acids or organic acids. The acid may be a strong acid or a weak acid. Preferably, the acid is a weak acid that does not fully dissociate in the aqueous solution. Example strong acids include hydrochloric acid and nitric acid. Non-limiting example weak acids include carboxylic acids, alkanoic acids, organic boric acids, organic phosphonic acids, organic phosphoric acids, organic sulfonic acids, or combinations thereof. Further non-limiting example weak acids include carboxylic acids such as lactic acid, acetic acid, formic acid, citric acid, oxalic acid, uric acid, malic acid, tartaric acid, (meth)acrylic acid, or combinations thereof. As a specific non-limiting example, the acid is or includes acetic acid. As a more specific non-limiting example, the acid is acetic acid, and the aqueous solution is mixture of water and acetic acid that is from 0.001% to 10% by weight acetic acid, or from 0.05% to 5% by weight acetic acid, or from 0.5% to 3% by weight acetic acid.

In step (b) of the dry process, the aqueous medium of step (a) is vigorously mixed at a mixing speed of 200 rpm to 500 rpm. After the mixing of step (b), the aqueous medium is allowed in step (c) over 1 hour to 48 hours to separate into a liquid phase and a solid phase. Generally, the particles in the aqueous medium settle to the bottom of the vessel containing the aqueous medium. Then, in step (d) of the dry process, at least a portion of the liquid phase is removed from the aqueous medium, by draining or filtering, for example, to obtain an aqueous slurry of the multistage polymer particles. In step (e), the foregoing steps (a), (b), (c), and (d) may be repeated at least once, preferably at least twice, before proceeding to the drying in step (f). In embodiments, if an acid is included in the aqueous medium of step (a) in any one performing of step (a), (b), (c), and (d), the acid may be included or excluded from any subsequent performing step (a) in the repeat steps (a), (b), (c), and (d) in (e). In still other embodiments, the acid may be included in every performance of steps (a), (b), (c), and (d). In still other embodiments, the acid may be excluded from every performance of steps (a), (b), (c), and (d).

After the final repeat of step (e) of the dry process, in (f) the aqueous slurry is dried, for example by spray drying or vacuum drying, to obtain multistage polymer particles having a reduced level of the at least one contaminant species. The dried multistage polymer particles obtained in step (f) then are combined with the photocurable component after drying the aqueous slurry in step (f), to obtain the multistage polymer particle composition.

In embodiments of the method for preparing the multistage polymer particle compositions involving a wet process or solvent-exchange process as the contaminant-reduction process, the contaminants are reduced through treatment of the multistage polymer particles with an organic solvent and an optional acid. The wet process or solvent-exchange process involves generally beginning with an aqueous latex dispersion of multistage polymer particles then, gradually over several steps, replacing the water of the aqueous latex with the organic solvent until a dispersion of the multistage polymer particles is obtained, with which the photocurable component is combined.

In particular, when the contaminant-reduction process is a wet process or solvent-exchange process, the contaminant-reduction process comprises the following steps:

(a) adding an organic solvent to an aqueous dispersion comprising the multistage polymer particles and water, the organic solvent being at least partially miscible in the water;

(b) adding an acid to the aqueous dispersion before or after adding the organic solvent to the aqueous dispersion in step (a), to obtain an acid-treated dispersion, the acid being chosen from organic acids or inorganic acids; and

(c) increasing a ratio of the organic solvent to the water in the acid-treated dispersion at least once by removing liquids from the aqueous dispersion and subsequently replacing the liquids with additional portions of organic solvent to obtain an organic-solvent based dispersion including the multistage polymer particles, the organic solvent, and residual water; and

(d) removing the organic solvent and any residual water from the organic-solvent based dispersion.

In the embodiments of the wet process or solvent-exchange process, the multistage polymer particles having a reduced level of the at least one contaminant species are combined with the photocurable component after obtaining the organic-solvent based dispersion in (c) and before removing the organic solvent and any residual water in (d).

Step (a) of the wet process or solvent-exchange process includes adding an organic solvent to an aqueous dispersion containing the multistage polymer particles and water. The aqueous dispersion may be a dispersion prepared by any customary method of preparing polymer powder latexes. For example, the aqueous dispersion may be a polymer dispersion or latex of the multistage polymer particles having been prepared by combining the multistage polymer particles with a volume of water sufficient to wet the particles, then the combination may be mixed until the particles are uniformly wetted and dispersed in the water. A typical aqueous dispersion may have a solids content of 10% to 60% by weight, or from 10% to 50% by weight, or from 10% to 40% by weight, or from 10% to 30% by weight, or from 20% to 60% by weight, or from 30% to 60% by weight, or from 20% to 50% by weight, or from 20% to 40% by weight, based on the weight of the aqueous dispersion.

The organic solvent is at least partially miscible in the water. Addition of the organic solvent, which may be followed by mixing, causes formation of agglomerates of the multistage polymer particles that may float in the liquid.

Non-limiting examples of organic solvents that are at least partially miscible in the water include ketones such as methyl ethyl ketone; esters such as methyl formate, methyl acetate, and ethyl acetate; ethers such as diethyl ether, ethylene glycol diethyl ether, and tetrahydropyrane; acetals, and alcohols such as isobutyl alcohol, and sec-butyl alcohol. The organic solvents may be used alone or in combination. For example, an organic solvent mixture may be a combination of two or more selected from low water-soluble organic solvents and high water-soluble organic solvents; examples of the low water-soluble organic solvent may include ketones such as methyl propyl ketone, diethylketone, methylisobutylketone, and ethylbutylketone; esters such as diethylcarbonate, butyl formate, propyl acetate, and butyl acetate; ethers such as diisopropyl ether, and dibutyl ether; aliphatic hydrocarbons such as pentane, hexane, heptane, and octane; aromatic hydrocarbons such as benzene, toluene, and xylene; and halogenated hydrocarbons such as methylene chloride, and chloroform; and examples of the high water-soluble organic solvent may include ketones such as acetone, and cyclohexanone; esters such as $\gamma$-valerolactone, and ethyleneglycol monomethylether acetate; alcohols such as ethanol, isopropylalcohol, and t-butylalcohol; and tetrahydrofuran. In example embodiments, the organic solvent is methylethyl ketone.

The organic solvent may be added to the aqueous dispersion at a volume ratio of organic solvent to aqueous dispersion from 10:1 to 1:10, or from 5:1 to 1:5, or from 3:1 to 1:3, or from 2:1 to 1:2, or from 1.5:1 to 1:1.5, or from 0.5:1 to 1.5:1, or from 0.6:1 to 1.4:1, or from 0.7:1 to 1.3:1, or from 0.8:1 to 1.2:1, or from 0.9:1 to 1.1:1, or about 1:1.

Step (b) of the wet process or solvent-exchange process includes adding the acid to the aqueous dispersion before or after adding the organic solvent to the aqueous dispersion in step (a) to obtain an acid-treated dispersion. It should be understood, therefore, that step (b) of the wet process may be performed in some embodiments before step (a) and, in other embodiments, after step (a) and before step (c).

In step (b), adding the acid may include combining from 30 parts to 70 parts by weight aqueous dispersion and from 30 parts to 70 parts by weight aqueous solution to obtain 100 parts by weight acid-treated dispersion. The aqueous solution containing the acid may have a concentration of 0.001% to 10% by weight acid. That is, the aqueous solution may include from 0.001% to 10% by weight acid, or preferably from 0.05% to 5% acid, more preferably from 0.5% to 3% by weight acid, based on the total weight of the aqueous solution.

The acid of step (b) may be chosen from inorganic acids or organic acids. The acid may be a strong acid or a weak acid. Preferably, the acid is a weak acid that does not fully dissociate in the aqueous solution. Example strong acids include hydrochloric acid and nitric acid. Non-limiting example weak acids include carboxylic acids, alkanoic acids, organic boric acids, organic phosphonic acids, organic phosphoric acids, organic sulfonic acids, or combinations thereof. Further non-limiting example weak acids include carboxylic acids such as lactic acid, acetic acid, formic acid, citric acid, oxalic acid, uric acid, malic acid, tartaric acid, (meth)acrylic acid, or combinations thereof. As a specific non-limiting example, the acid is or includes acetic acid. As a more specific non-limiting example, the acid is acetic acid, and the aqueous solution is mixture of water and acetic acid that is from 0.001% to 10% by weight acetic acid, preferably from 0.05% to 5% acetic acid, more preferably or from 0.5% to 3% by weight acetic acid, based on the weight of the aqueous solution.

Step (c) of the wet process or solvent-exchange process includes increasing a ratio of the organic solvent to the water in the aqueous dispersion by removing liquids from the aqueous dispersion and subsequently replacing the liquids with additional portions of the organic solvent to obtain an organic-solvent based dispersion comprising the multistage polymer particles, the organic solvent, and residual water. By this procedure, the water that was the initial solvent of the aqueous dispersion is substantially exchanged for the organic solvent to obtain the organic-solvent based dispersion.

In examples, from the aqueous dispersion that contains the multistage polymer particles, water, and organic solvent, the liquids (i.e., water and organic solvent) are removed, for example by separation, leaving behind a slurry of multistage polymer particles. To this slurry, the organic solvent is added, then the resulting mixture is agitated. The liquid phase of the mixture contains a substantially greater fraction of organic solvent than did the aqueous dispersion after the first amount of organic solvent was added. Even so, the liquid still contains residual water.

Thereupon, to continue the solvent exchange, the liquids are again separated from the solids. From one to ten further additions of organic solvent, followed by agitation, and concluded by draining may be made before adding the photocurable component to the organic-solvent based dispersion. After the final repeat of step (c), organic solvent may be added to the particles to redisperse the particles into an organic-solvent based dispersion. The organic-solvent based dispersion may have a residual water content of less than 10% by weight, less than 5% by weight, less than 4% by weight, less than 3% by weight, less than 2% by weight, less than 1% by weight, less than 0.5% by weight, less than 0.1% by weight, or less than 0.01% by weight, based on the weight of the organic-solvent based dispersion.

Step (d) of the wet process or solvent-exchange process include removing the organic solvent and residual water from the organic-solvent based dispersion to obtain the multistage polymer composition. The organic solvent and residual water may be removed by any customary method of removing liquids from solids, such as by gentle heating at a reduced pressure, optionally with agitation.

Returning then to the main method for preparing the multistage polymer particle composition, during or after the contaminant-reduction process the multistage polymer particles are combined with a photocurable component. For example, the multistage polymer particles and the photocurable component may be combined during a wet process or solvent-exchange process, or the multistage polymer particles and the photocurable component may be combined after a dry process. Generally, the photocurable component is any monomer or oligomer capable of forming a dispersion with the multistage polymer particle composition that can be cured after adding an initiator to the composition and subsequently curing the composition.

Non-limiting examples of monomers or oligomers included in the photocurable component are those previously described in this disclosure with respect to the multistage polymer particle composition.

The photocurable component may be combined with the multistage polymer particles in a sufficient amount, such that the organic-solvent based dispersion has a total solids content from 10% to 80% by weight, based on the sum of the solids weight of the multistage polymer particles and the solids weight of the photocurable component.

Multistage polymer particle compositions prepared by the method described herein are uniform, homogeneous dispersions. Remarkably, when the outer shell layer of the multistage polymer particles is a hydrophobic (meth)acrylate polymer and the photocurable component added to the multistage polymer particles during the method is a hydrophobic (meth)acrylate monomer, the homogeneity of the resulting composition is significantly greater than that obtained with customary methods that include spray drying an initial latex to form aggregates, performing a size reduction, then redispersing particles into a monomer.

Numerous commercially available core-shell rubber particles do not have the ability to disperse in certain acrylic monomers. The ability of a core-shell particle to disperse in an acrylic monomer depends on the solubility parameter of the core-shell particle, and how closely it matches the solubility parameter of the acrylic monomer. Certain hydrophobic monomers can cause core-shell particles to either swell or agglomerate. Agglomerations of particles act as stress concentrators due to their larger size. Agglomerations can have a detrimental effect on performance. Toughening of an acrylic material with core-shell particles requires that the particles are fully dispersed in the acrylic resin continuous phase. Naturally, this morphology requires a successful dispersion of core-shell particles in the acrylic resin composition prior to polymerization. A key aspect of using core-shell particles in light and peroxide curable compositions is ensuring that the formulation has high dispersion quality.

## Curable Formulations

The multistage polymer particle compositions prepared by the method of the invention may be included as a component of a curable formulation. The curable formulation may include the multistage polymer particle composition in combination with at least one initiator. Examples of initiators include thermal initiators and photoinitiators.

Non-limiting types of radical photo-initiators suitable for use in the curable formulations of the present disclosure include, for example, benzoins, benzoin ethers, acetophenones, $\alpha$-hydroxy acetophenones, benzyl, benzyl ketals, anthraquinones, phosphine oxides, acylphosphine oxides, $\alpha$-hydroxyketones, phenylglyoxylates, $\alpha$-aminoketones, benzophenones, thioxanthones, xanthones, acridine derivatives, phenazene derivatives, quinoxaline derivatives, triazine compounds, benzoyl formates, aromatic oximes, metallocenes, acylsilyl or acylgermanyl compounds, camphorquinones, polymeric derivatives thereof, and mixtures thereof.

Examples of suitable radical photo-initiators may include, but are not limited to, 2-methylanthraquinone, 2-ethylanthraquinone, 2-chloroanthraquinone, 2-benzyanthraquinone, 2-t-butylanthraquinone, 1,2-benzo-9,10-anthraquinone, benzyl, benzoins, benzoin ethers, benzoin, benzoin methyl ether, benzoin ethyl ether, benzoin isopropyl ether, alpha-methylbenzoin, alpha-phenylbenzoin, Michler's ketone, acetophenones such as 2,2-dialkoxybenzophenones and 1-hydroxyphenyl ketones, benzophenone, 4,4'-bis-(diethylamino) benzophenone, acetophenone, 2,2-diethyloxyacetophenone, diethyloxyacetophenone, 2-isopropylthioxanthone, thioxanthone, diethyl thioxanthone, 1,5-acetonaphthylene, benzil ketone, α-hydroxy keto, 2,4,6-trimethylbenzoyldiphenyl phosphine oxide, benzyl dimethyl ketal, 2,2-dimethoxy-1,2-diphenylethanone, 1-hydroxycylclohexyl phenyl ketone, 2-methyl-1-[4-(methylthio) phenyl]-2-morpholinopropanone-1, 2-hydroxy-2-methyl-1-phenyl-propanone, oligomeric α-hydroxy ketone, benzoyl phosphine oxides, phenylbis(2,4,6-trimethylbenzoyl)phosphine oxide, ethyl(2,4,6-trimethylbenzoyl)phenyl phosphinate, anisoin, anthraquinone, anthraquinone-2-sulfonic acid, sodium salt monohydrate, (benzene) tricarbonylchromium, benzil, benzoin isobutyl ether, benzophenone/1-hydroxycyclohexyl phenyl ketone, 50/50 blend, 3,3',4,4'-benzophenonetetracarboxylic dianhydride, 4-benzoylbiphenyl, 2-benzyl-2-(dimethylamino)-4'-morpholinobutyrophenone, 4,4'-bis(diethylamino)benzophenone, 4,4'-bis(dimethylamino)benzophenone, camphorquinone, 2-chlorothioxanthen-9-one, dibenzosuberenone, 4,4'-dihydroxybenzophenone, 2,2-dimethoxy-2-phenylacetophenone, 4-(dimethylamino)benzophenone, 4,4'-dimethylbenzil, 2,5-dimethylbenzophenone, 3,4-dimethylbenzophenone, diphenyl(2,4,6-trimethylbenzoyl)phosphine oxide /2-hydroxy-2-methylpropiophenone, 50/50 blend, 4'-ethoxyacetophenone, 2,4,6-trimethylbenzoyldiphenylphophine oxide, phenyl bis(2,4,6-trimethyl benzoyl)phosphine oxide, ferrocene, 3'-hydroxyacetophenone, 4'-hydroxyacetophenone, 3-hydroxybenzophenone, 4-hydroxybenzophenone, 1-hydroxycyclohexyl phenyl ketone, 2-hydroxy-2-methylpropiophenone, 2-methylbenzophenone, 3-methylbenzophenone, methylbenzoylformate, 2-methyl-4'-(methylthio)-2-morpholinopropiophenone, phenanthrenequinone, 4'-phenoxyacetophenone, (cumene)cyclopentadienyl iron(ii) hexafluorophosphate, 9,10-diethoxy and 9,10-dibutoxyanthracene, 2-ethyl-9,10-dimethoxyanthracene, thioxanthen-9-one and combinations thereof.

In particular, suitable photo-initiators may include a benzophenone (such as Speedcure BP, Speedcure 7005, Speedcure 7006), a thioxanthone (such as Speedcure 7010, Speedcure ITX), an α-hydroxy acetophenone, an acylphosphine oxide (such as Speedcure BPO, Speedcure TPO, Speedcure TPO-L); each of which is available from Sartomer USA, LLC.

The curable formulations may include up to 15 wt. % of the photoinitiator, based on the total weight of the curable formulation. For example, the curable formulation may include from 0.1 wt. % to 15 wt. %, from 0.1 wt. % to 10 wt. %, from 0.1 wt. % to 8 wt. %, from 0.1 wt. % to 6 wt. %, from 0.1 wt. % to 4 wt. %, from 0.1 wt. % to 3 wt. %, from 0.1 wt. % to 2 wt. %, from 0.1 wt. % to 1.5 wt. %, from 0.1 wt. % to 1 wt. %, from 0.1 wt. % to 0.75 wt. %, from 0.1 wt. % to 0.5 wt. %, from 0.5 wt. % to 10 wt. %, from 0.5 wt. % to 5 wt. %, from 0.5 wt. % to 2.5 wt. %, from 0.5 wt. % to 2 wt. %, from 0.5 wt. % to 1.5 wt. %, from 0.5 wt. % to 1 wt. %, or any subset thereof, of the photo-initiator, based on the total weight of the curable formulation.

In certain embodiments, the curable formulation does not include a photoinitiator. In other embodiments, the curable formulation comprises one or more photoinitiators that are cationic photoinitiators.

The amount of photoinitiator is not considered to be critical, but may be varied as may be appropriate depending upon the photoinitiator(s) selected, the amounts and types of ethylenically unsaturated compounds present in the curable formulation, the radiation source and the radiation conditions used, among other factors. Typically, however, the amount of photoinitiator may be from 0.05% to 5%, preferably 0.1% to 5% and most preferably 1% to 4.5% by weight, based on the total weight of the curable formulation.

In certain embodiments, the curable formulations described herein do not include any initiator and are curable (at least in part) with electron beam energy. In other embodiments, the curable formulations described herein include at least one free radical initiator that decomposes when heated or in the presence of an accelerator and are curable chemically (i.e., without having to expose the curable formulation to radiation). The at least one free radical initiator that decomposes when heated or in the presence of an accelerator may, for example, comprise a peroxide or azo compound. Suitable peroxides for this purpose may include any compound, in particular any organic compound, that contains at least one peroxy (-O-O-) moiety, such as, for example, dialkyl, diaryl and aryl/alkyl peroxides, hydroperoxides, percarbonates, peresters, peracids, acyl peroxides and the like. The at least one accelerator may comprise, for example, at least one tertiary amine and/or one or more other reducing agents based on M-containing salts (such as, for example, carboxylate salts of transition M-containing such as iron, cobalt, manganese, vanadium and the like and combinations thereof). The accelerator(s) may promote the decomposition of the free radical initiator at room or ambient temperature to generate active free radical species, such that curing of the curable formulation is achieved without having to heat or bake the curable formulation. In other embodiments, no accelerator is present and the curable formulation is heated to a temperature effective to cause decomposition of the free radical initiator and to generate free radical species that initiate curing of the polymerizable compound(s) present in the curable formulation.

Thus, in various embodiments, the curable formulations described herein are curable by techniques selected from the group consisting of radiation curing (UV radiation or electron beam curing), electron beam curing, chemical curing (using a free radical initiator that decomposes when heated or in the presence of an accelerator, e.g., peroxide curing), heat curing or combinations thereof.

The curable formulations described herein may be compositions that are to be subjected to curing by means of free radical polymerization or other types of polymerization (e.g., cationic polymerization). End-use applications for the inventive curable formulations include, but are not limited to, inks, coatings, adhesives, 3D printing resins, molding resins, sealants, composites, and the like.

According to certain embodiments, the curable formulations may be formulated such that they are fully curable at ambient or room temperature. In other embodiments, however, the curable formulations are formulated such that partial curing takes place at ambient or room temperature, with further curing being accomplished by heating the partially cured composition to an elevated temperature. For example, the initial curing may be carried out by exposing the curable formulation to an amount of radiation (e.g., ultraviolet light) effective to react (at least in part) the components of the curable formulation containing polymerizable ethylenically unsaturated functional groups, with further curing being effected by heating the curable formulation to a temperature effective to initiate reaction of the components of the curable formulation containing polymerizable heterocyclic-containing moieties. In such instances, curing may be considered to involve two stages: a first curing stage involving radiation (e.g., photo) curing and a second stage involving thermal curing.

Thus, in one embodiment, the curable formulation is supplied as a two component system. A first component A would contain one or more polymerizable, ethylenically unsaturated metal complexes; one or more polymerizable, ethylenically unsaturated compounds other than a polymerizable, ethylenically unsaturated metal complex and, optionally, one or more photoinitiators, but no polymerizable, heterocyclic moiety-containing compound, while a second component B would contain one or more polymerizable, heterocyclic moiety-containing compounds; optionally, one or more polymerizable, ethylenically unsaturated compounds other than a polymerizable, ethylenically unsaturated metal complex and, optionally, one or more photoinitiators, but no polymerizable, ethylenically unsaturated metal complex.

Thus, the polymerizable, ethylenically unsaturated metal complex(es) and the polymerizable, heterocyclic moiety-containing compound(s) are maintained in separate components of the system. Such a two component system is advantageous in embodiments where the polymerizable, ethylenically unsaturated metal complex(es) has or have some activity at normal storage temperatures (e.g., 15 °C to 30 °C) towards the polymerizable, heterocyclic moiety-containing compound(s), such that reaction (polymerization/curing) of the polymerizable, heterocyclic moiety-containing compound(s) takes place at a significant rate at such temperatures.

The A and B components are thus stored separately until it is desired to fabricate an article from the curable formulation or otherwise use the curable formulation. At such time, the two components are mixed together to form the curable formulation. Typically, the ingredients of the curable formulation are advantageously selected such that the curable formulation, as initially formed and prior to any curing, is liquid and has a desirably low viscosity at 25 °C. The effective pot life of the curable formulation will be determined by a number of factors, including for example the relative concentrations of each of the constituents of the curable concentration, the temperature of operation and the nature and reactivity of each of the constituents. For example, the pot life will be shorter if the polymerizable, ethylenically unsaturated metal complex is highly active with respect to its ability to cause polymerization of the polymerizable, heterocyclic moiety-containing compound(s) present in the curable formulation.

Once the A and B components are combined to provide the curable formulation, the curable formulation may, while still liquid or otherwise processable, be formed into a particular configuration as may be desired depending upon the intended end use application. For example, the curable formulation may be introduced into a mold, applied as a layer or coating to a substrate surface, applied as an adhesive between two substrates or used in a 3D printing process to form an article.

The curable formulation may then be exposed to a suitable source of radiation, such as ultraviolet light, under conditions effective to cure the polymerizable, ethylenically unsaturated species present in the curable formulation. Polymerization or curing of the polymerizable, heterocyclic moiety-containing compound(s) may at least begin to take place prior to or during such an irradiation step. Depending on the ingredients selected for use in the curable formulation and their reactivities, it may not be necessary to apply heat to the curable formulation in order to attain a satisfactory degree of curing of the polymerizable, heterocyclic moiety-containing compound(s). However, to effect a full cure of the curable formulation or to shorten the time needed to achieve full cure, it will typically be desirable to heat the curable formulation to a temperature above ambient or room temperature. Heating may be accomplished by any suitable method known in the art including, for example, by baking an article including or prepared using the curable formulation in an oven. Heating temperatures may vary significantly, depending upon the particular make-up and characteristics of the curable formulation, but baking the curable formulation at a temperature of from 80 °C to 220 °C. for a time of from 30 minutes to 12 hours will typically be suitable.

However, in other embodiments, the reactivity of the polymerizable, ethylenically unsaturated metal complex(es) toward the polymerizable, heterocyclic moiety-containing compound(s) is sufficiently low at ambient or room temperature that the curable formulation can be formulated, stored and used as a one component system. In such cases, the curable formulation, when employed for its intended use, may be initially "set" (e.g., converted from liquid to solid form) by exposure to a radiation source such that the polymerizable sites of ethylenic unsaturation present in certain components of the curable formulation are reacted or cured. The partially cured composition is heated then to a temperature effective to cause reaction of the polymerizable, heterocyclic moiety-containing compound(s) present, thereby fully curing the curable formulation. Such heating conditions may, for example, be similar to those described above.

Cured compositions prepared from curable formulations as described herein may be used, for example, in three-dimensional articles (wherein the three-dimensional article may consist essentially of or consist of the cured composition), coated articles (wherein a substrate is coated with one or more layers of the cured composition), laminated or adhered articles (wherein a first component of the article is laminated or adhered to a second component by means of the cured composition), composite articles or printed articles (wherein graphics or the like are imprinted on a substrate, such as a paper, plastic or M-containing substrate, using the cured composition).

A curable formulation to be used in a three dimensional printing process may include:

(a) a multistage polymer particle composition prepared according to a method of this disclosure;
(b) at least one at least one cationically curable monomer;
(c) optionally, at least one (meth)acrylate monomer or oligomer; and
(d) optionally, at least one photoinitiator.

In certain embodiments, the curable formulation which is employed as a resin in a three dimensional printing process may include, based on the total weight of the curable formulation, for example:

(a) 1% to 40%, preferably 5% to 30%, and most preferably 7% to 20% by weight of a multistage polymer particle composition prepared according to a method of this disclosure;
(b) 5% to 99%, preferably 10% to 99% and most preferably 15% to 99% by weight of at least one at least one cationically curable monomer;
(c) optionally, 5% to 90%, preferably 10% to 80% and most preferably 15% to 70% by weight of at least one (meth)acrylate monomer or oligomer;
(d) 0 to 5% by weight (e.g., 0.05% to 5% by weight) of at least one photoinitiator;

wherein the percentages by weight are based on the weight of the curable formulation.

The cationically polymerizable compound of the curable formulation may be selected from epoxides, oxetanes, oxolanes, cyclic acetals, cyclic lactones, thiiranes, thiethanes, spiro orthoesters, and mixtures thereof. In a preferred embodiment, the cationically polymerizable monomer may be selected from epoxides, oxetanes and mixtures thereof. Examples of suitable cationically curable monomers are as described above for the curable component.

The (meth)acrylate monomer or oligomer of the curable formulation may be selected from (meth)acrylate monomers, (meth)acrylates oligomers and combinations thereof. Examples of suitable (meth)acrylate monomers and (meth)acrylates oligomers are as described above for the photocurable component. The (meth)acrylate monomer or oligomer of the curable formulation is advantageously distinct from the (meth)acrylate monomer or oligomer that may be comprised in the curable component of the multistage polymer particle composition. For example, if the curable component of the multistage polymer particle composition comprises a hydrophobic (meth)acrylate monomer, the curable formulation may comprise one or more (meth)acrylate monomers or oligomers other than the hydrophobic (meth)acrylate monomer of the curable component.

Curing of compositions in accordance with the present invention may be accomplished by any suitable method, such as free radical and/or cationic polymerization. One or more initiators, such as a free radical initiator (e.g., photoinitiator, peroxide initiator) may be present in the curable formulation. Prior to curing, the curable formulation may be applied to a substrate surface in any known conventional manner, for example, by spraying, knife coating, roller coating, casting, drum coating, dipping and the like and combinations thereof. Indirect application using a transfer process may also be used. A substrate may be any commercially relevant substrate, such as a high surface energy substrate or a low surface energy substrate, such as a metal substrate or plastic substrate, respectively. The substrates may include metal, paper, cardboard, glass, thermoplastics such as polyolefins, polycarbonate, acrylonitrile butadiene styrene (ABS) and blends thereof, composites, wood, leather and combinations thereof. When used as an adhesive, the curable formulation may be placed between two substrates and then cured, the cured composition thereby bonding the substrates together to provide an adhered article.

Curing may be accelerated or facilitated by supplying energy to the curable formulation, such as by heating the curable formulation and/or by exposing the curable formulation to a radiation source, such as visible light, LED light, or UV light, infrared radiation, and/or electron beam radiation. Thus, the cured composition may be considered as the reaction product of the curable formulation, formed by curing.

A plurality of layers of a curable formulation according to embodiments herein may be applied to a substrate surface; the plurality of layers may be simultaneously cured (by exposure to a single dose of radiation, for example) or each layer may be successively cured before application of an additional layer of the curable formulation.

## Method of making a three-dimensional article

The curable formulations described herein are especially useful as 3D printing resin formulations, that is, compositions intended for use in manufacturing three-dimensional articles using 3D printing techniques. Such three-dimensional articles may be freestanding/self-supporting and may consist essentially of or consist of a composition in accordance with embodiments herein that has been cured. The three-dimensional article may also be a composite, comprising at least one component consisting essentially of or consisting of a cured composition as previously mentioned as well as at least one additional component including at least one material other than such a cured composition (for example, a metal component or a thermoplastic component). The curable formulations herein are particularly useful in digital light printing (DLP), although other types of three-dimensional (3D) printing methods may also be practiced using the inventive curable formulations.

The method of making a three-dimensional article of the invention comprises printing the three-dimensional article using a curable formulation according to the invention in a layer-by-layer or continuous manner

A method of making a three-dimensional article using a curable formulation as described herein may include:

(a) coating a first layer of a curable formulation as described herein onto a surface;
(b) curing the first layer, at least partially, to provide a cured first layer;
(c) coating a second layer of the curable formulation onto the cured first layer;
(d) curing the second layer, at least partially, to provide a cured second layer adhered to the cured first layer and
(e) repeating (c) and (d) a desired number of times to build up the three-dimensional article.

Although the photocuring steps may be carried out by any suitable means, which will in some cases be dependent upon the components present in the curable formulation, in certain embodiments of the invention the photocuring is accomplished by exposing the layer to be cured to an effective amount of radiation (e.g., electron beam radiation, UV radiation, visible light, LED light, or LCD light). The three-dimensional article that is formed by the process may be heated to effect thermal curing.

A further process using a curable formulation as described herein may include:

(a) coating a first layer of a curable formulation as described herein and in liquid form onto a surface;
(b) exposing the first layer image-wise to actinic radiation to form a first exposed imaged cross-section, wherein the radiation is of sufficient intensity and duration to cause at least partial curing (e.g., at least 50% curing, as measured by the % conversion of the polymerizable ethylenically unsaturated functional groups initially present in the curable formulation) of the layer in the exposed areas;
(c) coating an additional layer of the curable formulation onto the previously exposed imaged cross-section;
(d) exposing the additional layer image-wise to actinic radiation to form an additional imaged cross-section, wherein the radiation is of sufficient intensity and duration to cause at least partial curing (e.g., at least 50% curing, as measured by the % conversion of the polymerizable ethylenically unsaturated functional groups initially present in the curable formulation) of the additional layer in the exposed areas and to cause adhesion of the additional layer to the previously exposed imaged cross-section;
(e) repeating (c) and (d) a desired number of times to build up the three-dimensional article.

The process optionally may include (f) heating the three-dimensional article to a temperature effective to thermally cure the curable formulation (i.e., to react the polymerizable, heterocyclic moiety-containing compound(s) present in the curable formulation).

A further process using a curable formulation as described herein may include:

(a) providing a carrier and an optically transparent member having a build surface, the carrier and build surface defining a build region there between;
(b) filling the build region with the curable formulation;
(c) continuously or intermittently irradiating the build region with actinic radiation to form a cured composition from the curable formulation; and
(d) continuously or intermittently advancing the carrier away from the build surface to form the three-dimensional article from the cured composition.

The curable formulations of the present disclosure optionally may contain one or more additives instead of or in addition to the above-mentioned components. Such additives include, but are not limited to, antioxidants, ultraviolet absorbers, photostabilizers, foam inhibitors, flow or leveling agents, colorants, pigments, dispersants (wetting agents), slip additives, fillers, thixotropic agents, matting agents, accelerators, adhesion promoters (such as acidic adhesion promoters), thermoplastics and other types of polymers (other than or in addition to the above-described block copolymers), waxes or other various additives, including any of the additives conventionally utilized in the coating, sealant, adhesive, molding, or ink arts.

## Coated Substrates

The multistage polymer particle compositions described herein, or the curable compositions including a multi-stage polymer particle composition described herein may be implemented as a coating material for providing a coated substrate.

Accordingly, a coated substrate may include a substrate and a coating prepared by applying the multistage polymer particle composition or a curable composition containing the multistage polymer particle composition on at least a portion of a surface of the substrate, then subsequently curing the curable composition. The curable composition may be applied to the substrate by dip coating, bar coating, electrospinning, layer-by-layer coating, drop coating, spin coating, slot die coating, or doctor blading, for example. The curing may be accomplished, based on the components in the curable composition, by customary curing techniques including heating, exposure to ultraviolet radiation, or combinations thereof.

In some examples, the substrate may be chosen from metals, ceramics, composites, or polymers. In further examples, the substrate may be a metal substrate on which the cured composition is coated. In embodiments, the substrate is a portion of a battery pack or a portion of a battery housing, such as for a lithium-ion battery, and the layer is a protective layer or a dielectric layer. The layer may be applied to a conductive element of a battery, preferably a lithium-ion battery, as a dielectric layer. The cured product coated on such a battery pack, battery housing, or conductive element, serves as a protective layer or a dielectric layer, in which the cured product has good an electric insulating properties as well as good thermal and chemical resistance.

The curable compositions described herein may be used further as components of an acrylic structural adhesive, a thermoset material, an impact-resistant industrial coating, an electronic device. In any of such applications, the curable composition is included in combination with other components or ingredients that are customary to the particular application.

## ASPECTS

Embodiments of this disclosure are further elucidated through the following aspects, which shall not be construed as limiting on the disclosure or the appended claims:

Aspect 1: A method for preparing a multistage polymer particle composition for curable formulations, the method comprising the following steps: subjecting multistage polymer particles to a contaminant-reduction process that reduces a level of at least one contaminant species present in the multistage polymer particles, the at least one contaminant species being selected from potassium, sodium, phosphorus, sulfur, or combinations thereof; and combining the multistage polymer particles with a photocurable component during or after the contaminant-reduction process; wherein: the multistage polymer particles comprise a core polymer, an inner shell polymer surrounding the core polymer, and an outer shell polymer surrounding the inner shell polymer; the core polymer has a glass transition temperature of less than 10 °C; the inner shell polymer has a glass transition temperature of at least 60 °C; and the outer shell polymer has a glass transition temperature of at least 30 °C.

Aspect 2: The method of Aspect 1, wherein the contaminant-reduction process comprises the following steps: (a) adding an organic solvent to an aqueous dispersion comprising the multistage polymer particles and water, the organic solvent being at least partially miscible in the water; (b) adding an acid to the aqueous dispersion before or after adding the organic solvent to the aqueous dispersion in step (a), to obtain an acid-treated dispersion, the acid being chosen from organic acids or inorganic acids; (c) increasing a ratio of the organic solvent to the water in the acid-treated dispersion at least once by removing liquids from the aqueous dispersion and subsequently replacing the liquids with additional portions of organic solvent to obtain an organic-solvent based dispersion; and (d) removing the organic solvent and any residual water from the organic-solvent based dispersion, wherein the multistage polymer particles are combined with the photocurable component after obtaining the organic-solvent based dispersion in (c) and before removing the organic solvent and any residual water in (d).

Aspect 3: The method of Aspect 1, wherein the contaminant-reduction process comprises the following steps: (a) wetting the multistage polymer particles to obtain an aqueous medium, the aqueous medium comprising deionized water and, optionally, an acid chosen from organic acids or inorganic acid; (b) mixing the aqueous medium; (c) allowing the aqueous medium to separate into a liquid phase and a solid phase; (d) removing a portion of the liquid phase from the aqueous medium to obtain an aqueous slurry of the multistage polymer particles; (e) repeating steps (a), (b), (c), and (d) at least once; and (f) drying the aqueous slurry to obtain multistage polymer particles having a reduced level of the at least one contaminant species, wherein the multistage polymer particles having a reduced level of the at least one contaminant species are combined with the photocurable component after drying the aqueous slurry in (f).

Aspect 4: The method of any of Aspect 1 to 3, wherein: the core polymer comprises residues of monomers chosen from methyl acrylate, propyl acrylate, isopropyl acrylate, butyl acrylate, tert-butyl acrylate, methyl methacrylate, ethyl methacrylate, butyl methacrylate, isoprene, butadiene, combinations of the foregoing, or combinations of isoprene and butadiene with up to 98 wt% of a vinyl monomer chosen from styrene, alkylstyrene, acrylonitrile, or alkyl (meth)acrylate; the inner shell polymer comprises residues of monomers chosen from methyl (meth)acrylate, ethyl (meth)acrylate, butyl (meth)acrylate, or combinations thereof; and the outer shell polymer comprises residues of monomers chosen from alkyl (meth)acrylates, alkyl (meth)acrylate oxetanes, or alkyl (meth)acrylate epoxides.

Aspect 5. The method of any one of Aspects 2 to 4, wherein the acid is chosen from carboxylic acids, alkanoic acids, organic boric acids, organic phosphonic acids, organic phosphoric acids, organic sulfonic acids, or combinations thereof.

Aspect 6: The method of any one of Aspects 2 to 5, wherein the acid is a carboxylic acid.

Aspect 7: The method of any one of Aspects 2 to 6, wherein the acid is chosen from lactic acid, acetic acid, formic acid, citric acid, oxalic acid, uric acid, malic acid, tartaric acid, (meth)acrylic acid, or combinations thereof.

Aspect 8: The method of any one of Aspects 2 to 7, wherein the acid comprises acetic acid.

Aspect 9: The method of any one of Aspects 2 to 8, wherein the acid is added to the aqueous dispersion as an aqueous solution comprising from 0.001% to 10% by weight of the acid, based on the total weight of the aqueous dispersion.

Aspect 10: The method of any one of Aspects 2 to 9, wherein the acid is added to the aqueous dispersion as an aqueous solution comprising from 0.05% to 5% by weight of the acid, based on the total weight of the aqueous solution.

Aspect 11: The method of any one of Aspects 2 to 10, wherein the acid is added to the aqueous dispersion as an aqueous solution comprising from 0.5% to 3% by weight of the acid, based on the total weight of the aqueous solution.

Aspect 12: The method of any one of Aspects 2 to 11, wherein adding the acid comprises combining from 30 parts to 70 parts by weight aqueous dispersion and from 70 parts to 30 parts by weight aqueous solution to obtain 100 parts by weight acid-treated dispersion, and wherein the aqueous solution comprises from 0.001% to 10% by weight of the acid, based on the total weight of the aqueous solution.

Aspect 13: The method of any one of Aspects 2 to 12, wherein: the multistage polymer particles in the aqueous dispersion, as determined by elemental analysis, have an initial potassium content, an initial sodium content, an initial phosphorus content, and an initial sulfur content before the contaminant-reduction process; the multistage polymer particles in the multistage polymer particle composition have, as determined by elemental analysis: a final potassium content less than 90% of the initial potassium content; a final sodium content less than 90% of the initial sodium content; a final phosphorus content less than 90% of the initial phosphorus content; and/or a final sulfur content less than 90% of the initial sulfur content after the contaminant-reduction process.

Aspect 14: The method of any one of Aspects 2 and 4 to 13, wherein the organic solvent is chosen from ketones, esters, ethers, acetals, alcohols, and combinations thereof.

Aspect 15: The method of any one of Aspects 2 and 4 to 14, wherein the organic solvent comprises methylethyl ketone.

Aspect 16: The method of any one of Aspects 1 to 15, wherein the multistage polymer particle composition comprises, based on the total weight of the multistage polymer particle composition: from 10% to 40% by weight multistage polymer particles; and from 60% to 90% by weight photocurable component.

Aspect 17: The method of any one of Aspects 1 to 16, wherein: the core polymer comprises a butadiene homopolymer or a butadiene copolymer; the inner shell polymer comprises a copolymer of methyl methacrylate and divinyl benzene; and the outer shell polymer comprises methyl methacrylate.

Aspect 18: The method of any one of Aspects 1 to 17, wherein: the outer shell polymer comprises monomer residues of at least one monomer having a Hansen solubility parameter polarity component $\delta_P$ less than 10.5 MPa$^{1/2}$; and the photocurable component has a Hansen solubility parameter polarity component $\delta_P$ less than 10.5 MPa$^{1/2}$.

Aspect 19. The method of any one of Aspects 1 to 18, wherein: the core polymer comprises residues of monomers chosen from methyl acrylate, propyl acrylate, isopropyl acrylate, butyl acrylate, tert-butyl acrylate, methyl methacrylate, ethyl methacrylate, butyl methacrylate, isoprene, butadiene, combinations of the foregoing, or combinations of isoprene and butadiene with up to 98 wt% of a vinyl monomer chosen from styrene, alkylstyrene, acrylonitrile, or alkyl (meth)acrylate; the inner shell polymer comprises residues of monomers chosen from methyl (meth)acrylate, ethyl (meth)acrylate, butyl (meth)acrylate, or combinations thereof; and the outer shell polymer comprises residues of monomers chosen from cyclohexyl (meth)acrylate, 4-tertbutyl cyclohexyl (meth)acrylate, bornyl (meth)acrylate, norbornyl (meth)acrylate, isobornyl acrylate, isobornyl (metha)crylate, fenchyl (meth)acrylate, dicyclopentanyl (meth)acrylate, dicyclopentenyl (meth)acrylate, adamantyl acrylate, adamantyl (meth)acrylate, dimethyl adamantyl (meth)acrylate, cyclodecyl acrylate, cyclodecyl (meth)acrylate, or combinations thereof.

Aspect 20: The method of any one of Aspects 1 to 19, wherein the outer shell polymer has a weight-average molecular weight from 10,000 g/mol to 500,000 g/mol.

Aspect 21: The method of any one of Aspects 1 to 20, wherein: the core polymer comprises a butadiene homopolymer or a butadiene copolymer; the inner shell polymer comprises a copolymer of methyl methacrylate and divinyl benzene; and the outer shell polymer comprises isobornyl methacrylate.

Aspect 22. The method of any one of Aspects 1 to 21, wherein the photocurable component comprises at least one photocurable monomer or oligomer chosen from (meth)acrylate monomers, (meth)acrylate oligomers, ethylenically unsaturated compounds other than (meth)acrylates, oxetanes, epoxides, cationically polymerizable alcohols, cationically polymerizable vinyl ethers, and combinations thereof.

Aspect 23: The method of any one of Aspects 1 to 22, wherein the photocurable component comprises at least one (meth)acrylate monomer chosen from isobornyl (meth)acrylate, 3,3,5-trimethylcyclohexyl (meth)acrylate, tert-butyl cyclohexyl (meth)acrylate, tricyclodecanedimethanol di(meth)acrylate, cyclohexane dimethanol di(meth)acrylate, isodecyl (meth)acrylate, isooctyl (meth)acrylate, stearyl (meth)acrylate, 1,12-dodecanediol di(meth)acrylate, lauryl (meth)acrylate, tridecyl (meth)acrylate, octyl/decyl (meth)acrylate, caprolactone (meth)acrylate, neopentyl glycol di(meth)acrylate, or combinations thereof.

Aspect 24: The method of any one of Aspects 1 to 23, wherein the photocurable component comprises a tricyclodecanedimethanol dimethacrylate.

Aspect 25. A curable formulation comprising: from 1% to 40% by weight multistage polymer particle composition prepared according to the method of any one of Aspects 1 to 24; from 5% to 99% by weight of at least one cationically curable monomer; a cationic photoinitiator; optionally, from 5% to 90% by weight of at least one (meth)acrylate monomer or oligomer; and optionally, at least one radical photoinitiator, wherein the percentages by weight are based on the weight of the curable formulation.

Aspect 26: A method of making a three-dimensional article, the method comprising printing the three-dimensional article using a curable formulation according to Aspect 25 in a layer-by-layer or continuous manner.

Aspect 27: The method of Aspect 26, wherein printing the three-dimensional article comprises: (a) providing a first layer of the curable formulation onto a surface; (b) curing the first layer, at least partially, to provide a cured first layer; (c) providing a second layer of the curable formulation onto the cured first layer; (d) curing the second layer, at least partially, to provide a cured second layer adhered to the cured first layer; and (e) repeating (c) and (d) a desired number of times to build up the three-dimensional article.

Aspect 28: The method of Aspect 26, wherein printing of the three-dimensional article comprises: (a) providing a first layer of the curable formulation in liquid form onto a surface; (b) exposing the first layer imagewise to actinic radiation to form a first exposed imaged cross-section, wherein the radiation is of sufficient intensity and duration to cause at least partial curing of the first layer in the exposed area(s); (c) providing an additional layer of the curable formulation in liquid form onto the previously exposed imaged cross-section; (d) exposing the additional layer imagewise to actinic radiation to form an additional imaged cross-section, wherein the radiation is of sufficient intensity and duration to cause at least partial curing of the additional layer in the exposed area(s) and to cause adhesion of the additional layer to the previously exposed imaged cross-section; and (e) repeating (c) and (d) a desired number of times to build up the three-dimensional article.

Aspect 29: The method of Aspect 26, wherein printing of the three-dimensional article comprises: (a) providing a carrier and an optically transparent member having a build surface, the carrier and build surface defining a build region there between; (b) filling the build region with the curable formulation; (c) continuously or intermittently irradiating the build region with actinic radiation to form a cured composition from the curable formulation; and (d) continuously or intermittently advancing the carrier away from the build surface to form the three-dimensional article from the cured composition.

## EXAMPLES

The following Examples are offered by way of illustration and are presented in a manner such that one skilled in the art should recognize are not meant to be limiting to the present disclosure as a whole or to the appended claims.

### Materials and Compositions

Table 1 provides chemical descriptions for various materials named by tradename in these Examples.

TABLE 1: Chemical Descriptions of Materials Used in These Examples

| Material | Chemical Description | Supplier |
|---|---|---|
| SR833S | tricyclodecane dimethanol diacrylate | Sartomer |
| SR399 | di-pentaerythritol Pentaacrylate | Sartomer |
| CN110 | bisphenol A epoxy diarylate | Sartomer |
| UViCure S105 | 3,4-epoxycyclohexylmethyl 3,4-epoxycyclohexanecarboxylate | Sartomer |
| Eponex 1510 | hydrogenated bisphenol A diglcidyl ether | Hexion |
| Epon 828 | bisphenol A diglycidyl ether | Hexion |
| UViCure S130 | 3 -ethyl-3 -hydroxymethyl-oxetane | Sartomer |
| Speedcure BKL | 2,2-dimethoxy-1,2-diphenylethan-1 -one | Sartomer- |
| Speedcure ITX | 1-chloro-4-propoxythioxanthone | Sartomer- |
| Speedcure 938 | bis (4-tert-butylphenyl) iodonium hexafluorophosphate | Sartomer- |
| MSP1 | a multistage polymer particle having a rubber core, a methacrylate-based inner shell, and a non-hydrophobic polymer outer shell having a Hansen solubility parameter polarity component ($\delta_P$) greater than 10.5 MPa$^{1/2}$ | — |
| MSP2 | a multistage polymer particle having a rubber core, a methacrylate-based inner shell, and an outer shell of a hydrophobic polymer having a Hansen solubility parameter polarity component ($\delta_P$) less than 10.5 MPa$^{1/2}$ | — |
| Potassium Oleate | $C_{17}H_{33}COOK$ | Sigma-Aldrich |
| Tetrasodium pyrophosphate anhydrous | $Na_4P_2O_7$ | Sigma-Aldrich |
| Surfactant soap | a proprietary composition including surfactants | Arkema |

With regard to multistage polymer particles MSP1 and MSP2, further descriptions of the particles in the Examples may include letters preceding the particle identity to indicate a type of processing performed on the multistage polymer particles. For example, DW-MSP1 refers to MSP1 multistage polymer particles, on which a dry-particle water contaminant-reduction process has been performed.

Similarly, further descriptions of the MSP1 and MSP2 particles in the Examples may include letters following the particle identity to indicate that the particle is a component of a composition with a specific monomer, where the composition is prepared by a particular process. For example, MSP1-SE refers to a composition of containing MSP1 particles and a monomer, where the composition is prepared by a solvent exchange process, and MSP1-SE-A refers to a composition containing MSP1 particles and a monomer, where the composition is prepared by a solvent exchange process including an acid wash.

## Example 1: Dry Particle Water Contaminant-Reduction Process for Multistage Polymer Particles

The following procedure applies to a dry-particle water contaminant-reduction process for multistage polymer particles such as MSP1 or MSP2 to produce dry-washed multistage polymer particles DW-MSP1 or DW-MSP2, respectively.

In a four-neck 1000-mL flask with a funnel on the bottom, 102 g of MSP1 or MSP2 powder is charged, to which, 450 mL of deionized (DI) water is added, and the contents of the flask are slowly mixed by an overhead mechanical mixer. Once the powder wetted, the mixture is heated to 60 °C by a heating mantle wrapped around the flask. The flask contents then are mixed at 450 rpm for about 1.5 hours. The mixer is stopped to allow phase separation, then the aqueous layer is drained out. The solids are washed an additional two times in the same manner with DI water.

After the final washing in DI water, the aqueous slurry of multistage polymer particles is transferred to a 1000 mL round flask and then rotovapped to remove extra water to yield white power 95.5 g. This washed multistage polymer particles are uniformly laid over a stainless steel tray, which is vacuum dried in an over at 60 °C overnight to afford 94.9 g of final product DW-MSP1 or DW-MSP2 at a yield of 93.6%.

## Example 2: Reduction of Ionic Contaminants in Multistage Polymer Particles Prepared by Dry Particle Contaminant-reduction Process

A batch of MSP1 or MSP2 particles may be analyzed to determine the reduction of various contaminant species as a result of the dry particle contaminant-reduction process described in Example 1 of this disclosure.

A selected amount of particles of the batch of MSP1 or MSP2 particles is analyzed by elemental analysis (ICP) to determine contents of various contaminant ionic species present in the multistage polymer particles. Particles of the same batch of MSP1 or MSP2 particles are then subjected to the dry particle contaminant-reduction process described in Example 1, and the particles post-washing are analyzed by the same elemental analysis technique. From each elemental analysis, respective amounts of potassium, sodium, phosphorus, and sulfur may be determined. Examples of results from such analyses are provided in TABLE 2.

TABLE 2: Elemental analyses of multistage polymer particles before and after dry particle contaminant-reduction process according to Example 1

| Contaminant | Sample Contaminant Level (ppm) | | % Contaminant Remaining | Sample Contaminant Level (ppm) | | % Contaminant Remaining |
|---|---|---|---|---|---|---|
| | MSP 1 neat | MSP1 post-DI washing | | MSP2 neat | MSP2 post-DI washing | |
| Potassium (K) | 30 | < 27 | < 90% | 30 | < 27 | < 90% |
| Sodium (Na) | 90 | < 81 | < 90% | 90 | < 81 | < 90% |
| Phosphorus (P) | 5 | < 4.5 | < 90% | 5 | < 4.5 | < 90% |
| Sulfur (S) | 1000 | < 900 | < 90% | 1000 | < 900 | < 90% |

## Example 3: General Procedure for Preparation of Multistage Polymer Particle Composition by Solvent-Exchange

The following general procedure applies to preparation of multistage polymer particle compositions by a solvent-exchange process.

To a three-neck, 1-L washing flask equipped with agitator, thermocouple, temperature controller, addition funnel, and aqueous waste collecting beaker, 100 grams of a latex including multistage polymer particle MSP1 or MSP2 (32 wt% solid content) and 100 grams methylethyl ketone (MEK) are added. The contents of the flask are mixed at 300 rpm for 30 minutes. Then, 160 grams water are added through an addition funnel over 3 minutes with agitation. The agitation is stopped when all water is added in, to obtain floating agglomerates in liquid. The agglomerates are allowed to settle for about 30 minutes. The liquid is drained into a beaker, and the agglomerates are retained in the washing flask.

Then, 80 grams of MEK are added into the washing flask with agitation at 300 rpm for about 30 minutes to re-disperse the agglomerates into the MEK. To the re-dispersed agglomerates, 128 grams of a photocurable monomer (SR833S) is added, and agitation is continued at 300 rpm for another 30 minutes. The MEK and any residual water are stripped off at 50 °C/20 mmHg with agitation at 200 rpm to obtain a multistage polymer particle composition, MSP1-SE or MSP2-SE, of the multistage polymer particle MSP1 or MSP2, respectively, in the monomer. The procedure yields about 160 grams of the multistage polymer particle composition having a 20 wt.% solids content.

### Example 4: Reduction of Ionic Contaminants in Multistage Polymer Particles Prepared by Solvent Exchange Process

Batches of MSP1 and MSP2 particles may be assessed to determine the reduction of various contaminant species as a result of the solvent exchange process described in Example 3 of this disclosure.

Selected amounts of particles of the batches of MSP1 and MSP2 are analyzed by elemental analysis (ICP) to determine contents of various contaminant ionic species present in the multistage polymer particles. Particles of the same batches of MSP1 and MSP2 particles are then subjected to the solvent exchange process described in Example 3, and the particles post-washing are analyzed by the same elemental analysis technique. From each elemental analysis, respective amounts of potassium, sodium, phosphorus, and sulfur are determined. Examples of results from these analyses are provided in TABLE 3.

TABLE 3: Elemental analyses of multistage polymer particles before and after solvent exchange contaminant-reduction process according to Example 3

| Contaminant | Sample Contaminant Level (ppm) | | % Contaminant Remaining | Sample Contaminant Level (ppm) | | % Contaminant Remaining |
|---|---|---|---|---|---|---|
| | MSP1 neat | MSP1 solvent-exchange | | MSP2 neat | MSP2 solvent-exchange | |
| Potassium (K) | 30 | < 24 | < 80% | 30 | < 24 | < 80% |
| Sodium (Na) | 90 | < 72 | < 80% | 90 | < 72 | < 80% |
| Phosphorus (P) | 5 | <4 | < 80% | 5 | <4 | < 80% |
| Sulfur (S) | 1000 | < 900 | < 80% | 1000 | < 900 | < 80% |

### Example 5: General Procedure for Preparation of Acid-Washed Multistage Polymer Particle Composition by Solvent-Exchange with Acid Wash to Remove Contaminants

The following general procedure applies to preparation of multistage polymer particle compositions by a solvent-exchange process, with an acid wash to remove residual surfactants and ionic contaminants present in the multistage polymer particles.

To a three-neck, 1-L washing flask equipped with agitator, thermocouple, temperature controller, addition funnel, and aqueous waste collecting beaker, 100 grams of a latex including multistage polymer particle MSP1 or MSP2 (32 wt% solid content) and 100 grams methylethyl ketone (MEK) are added. The contents of the flask are mixed at 300 rpm for 30 minutes. To the flask, 160 grams of an organic or inorganic acid solution such as 1% or 2% acetic acid is added through an addition funnel over 3 minutes with agitation. The agitation is continued until all acetic acid solution has been added, to obtain floating agglomerates in liquid. The mixture is allowed to settle for about 30 minutes. The liquid is drained into a beaker, and the agglomerates are retained in the washing flask. Then 160 grams of water is added to the flask with agitation for 2 minutes. The agitation is continued until all water is added. The mixture is allowed to settle for half an hour. The liquid is dropped to a beaker, and the agglomerates are retained in the washing flask.

Then, 160 grams of MEK are added into the washing flask with agitation at 300 rpm for about 30 minutes to re-disperse the agglomerates into the MEK. To the re-dispersed agglomerates, 128 grams of a photocurable monomer (SR833S) is added, and agitation is continued at 300 rpm for another 30 to 60 minutes. The solution is filtered through a medium mesh filed, and the MEK and any residual water are stripped off at 50 °C/20 mmHg with agitation at 200 rpm to obtain an acid-washed multistage polymer particle composition, MSP1-SE-AW or MSP2-SE-AW, of the multistage polymer particle MSP1 or MSP2, respectively, in the monomer. The procedure yields about 160 grams of the multistage polymer particle composition having a 20 wt.% solids content.

### Example 6: Reduction of Ionic Contaminants in Multistage Polymer Particles Prepared by Solvent Exchange Process with Acid Wash

Batches of MSP1 and MSP2 particles may be assessed to determine the reduction of various contaminant species as a result of the solvent exchange process with acid wash, as described in Example 5 of this disclosure.

Selected amounts of particles of the batches of MSP1 and MSP2 are analyzed by elemental analysis (ICP) to determine contents of various contaminant ionic species present in the multistage polymer particles. Particles of the same batches of MSP1 and MSP2 particles are then subjected to the solvent exchange process with acid wash described in Example 5, and the particles post-washing are analyzed by the same elemental analysis technique. From each elemental analysis, respective amounts of calcium, cobalt, copper, iron, potassium, sodium, phosphorus, and sulfur are determined. Example results from these analyses are provided in TABLE 4.

TABLE 4: Elemental analyses of multistage polymer particles before and after solvent exchange with acid contaminant-reduction process according to Example 5

| Contaminant | Sample Contaminant Level (ppm) | | % Contaminant Remaining | Sample Contaminant Level (ppm) | | % Contaminant Remaining |
|---|---|---|---|---|---|---|
| | MSP1 neat | MSP1 solvent-exchange with acid | | MSP2 neat | MSP2 solvent-exchange with acid | |
| Potassium (K) | 40 | < 30 | < 75% | 40 | < 30 | < 75% |
| Sodium (Na) | 80 | < 60 | < 75% | 80 | < 60 | < 75% |
| Phosphorus (P) | 4 | < 3 | < 75% | 4 | < 3 | < 75% |
| Sulfur (S) | 1000 | < 750 | < 75% | 1000 | < 750 | < 75% |

### Example 7: Preparation of Aqueous Additive Solutions

Solutions A and B are prepared by dissolving an additive in deionized (DI) water to prepare 5% by weight solutions. The solution pH values were tested with pH paper indicating a range from pH 0 to 14.

Solution (A) was a 5% by weight solution of potassium oleate in deionized water and had a pH of 11.

Solution (B) was a 5% by weight solution of tetrasodium pyrophosphate in deionized water and had a pH of 10.

Solution (D) was a 5% by weight solution of a proprietary surfactant soap obtained from Arkema ACR and had a pH of 12.

In the Examples herein, the respective additive solutions are shaken and mixed before being added to formulations.

### Example 8: Preparation of Hybrid Formulations for Stability Evaluations

Various hybrid formulations were prepared for stability evaluations in the Examples herein. To prepare the hybrid formulations, highly viscous CN110 is preheated in a 65 °C oven for at least 2 to 4 hours. Photoinitiators Speedcure BKL, Speedcure 938, and Speedcure ITX are weight into a 1-liter plastic bottle, then SR399, Eponex 1510, Uvicure S101, CN110, Uvicure S105, and DER 331 are added. The resulting composition is mixed using a mechanical mixer until the solution becomes homogeneous. A cap is sealed onto the plastic bottle, which is placed into rotary oven at 60 °C for 4 hours until the solution referred to as Matrix 1 becomes clear. The formulation of Matrix 1 is provided in TABLE 5.

TABLE 5: Hybrid matrix formulation

| Matrix 1 Ingredient | Wt.% |
|---|---|
| Epon 828 | 30 |
| Eponex 1510 | 15 |
| UViCure S105 | 20 |
| UViCure S130 | 15 |
| SR399 | 5 |
| CN110 | 15 |
| Speedcure BKL | 1 |
| Speedcure 938 | 2 |
| Speedcure ITX | 0.2 |
| Total | 103.2 |

Then, 100 grams of Matrix 1 was weighed into each of three 100 mL FlackTec jars, and aqueous additive solutions A, B, and D as described in Example 7 herein where charged into the jars as indicated in TABLE 6. Each formulation was mixed using FlackTec mixer at 3500 rpm for 3 minutes, then each jar was sealed with white tape and placed in a rotary oven at 60 °C for 2 hours. After the 2 hours, the jars were removed from the over and mixed at 3500 rpm for another 5 minutes until all solutions became homogeneous. The samples were stored in the dark at room temperature (22 °C ± 3 °C) and for four weeks. After the four weeks, viscosity and color changes were assessed by visual observation, as recorded in TABLE 6.

TABLE 6: Stability of aqueous additive solution in hybrid formulations after 4 weeks ambient aging

| Sample | Component | | | | | Property | |
|---|---|---|---|---|---|---|---|
| | Matrix 1 | DI water | Potassium Oleate (A) | Tetrasodium pyrophosphate anhydrous (B) | Surfactant soap (D) | Viscosity * | Color ** |
| Ctr 1 | 100 | 0.5 | | | | M | C |
| Ctr 2 | 100 | 1 | | | | M | C |
| Ctr 3 | 100 | 2 | | | | H | C |
| A1 | 100 | | 0.5 | | | L | LY |
| A2 | 100 | | 1 | | | M | Y |
| A3 | 100 | | 2 | | | Gel | B |
| B1 | 100 | | | 0.5 | | L | C |
| B2 | 100 | | | 1 | | M | C |
| B3 | 100 | | | 2 | | H | LY |
| D1 | 100 | | | | 0.5 | Gel | Y |
| D2 | 100 | | | | 1 | Gel | B |
| D3 | 100 | | | | 2 | Gel | B |
| * H - High ; M - Medium high ; L - Low. ** C - Clear; LY - Light yellow; Y - Yellow; B - Brown | | | | | | | |

### Example 9: Preparation of Cationic Formulations

Cationic formulations of the Examples of this disclosure are prepared in a manner consistent with the following procedure.

To a 100-mL FlackTec jar, 3.0 g of Speedcure 938 and 0.2 g of Speedcure ITX are added. Then, the jar is charged with 77.4 g of UViCure S105 and 19.4 g of UViCure S130, and the resulting mixture is mixed by a FlackTec mixer for 3 minutes at 3000 rpm. The, 10 g of multistage polymer particle powder such as MSP1, MSP2, DW-MSP1, or DW-MSP2 is added, and the resulting mixture is slowly mixed by and to wet the multistage polymer powder.

After the multistage polymer powder is wetted, the mixture is mixed by FlackTec mixer for about 3 minutes at 3000 rpm. The jar is sealed and placed in a rotary oven at 60 °C for 2 hours. After heating, the jar is removed from the oven and mixed at 3000 rpm for another 5 minutes until the solution becomes homogenous.

**Example 10: Preparation and Mechanical Characterization of Hybrid Formulations for Printing**

Hybrid formulations for 3D printing were prepared by adding Speedcure BKL, Speedcure 938, and Speedcure ITX to a 100-mL FlackTec jar. Then, SR833S, UViCure S105, and UViCure S130 were added, and the jars were mixed by a FlackTec mixer for 3 minutes at 3000 rpm.

One of the resulting mixtures was a control, to which no multistage polymer particle was added. To the remaining mixtures were added one of (A) neat MSP2 powder, (B) a multistage polymer particle composition prepared by the dry process according to Example 1 herein, or (C) a multistage polymer particle composition prepared by the solvent exchange process with acid wash according to Example 5 herein. The multistage polymer particle compositions were dispersions of 20% by weight MSP2 in 80% by weight SR833S.

The neat MSP2 formulation was mixed slowly by hand to allow MSP2 powder to wet.

Finally, each sample was mixed by a FlackTec mixer for another 3 minutes at 3000 rpm. The jars were sealed with white tape and were placed into a rotary oven at 60 °C for 2 hours. After the two hours, the jars were removed from the over and were mixed at 3000 rpm for 5 minutes until all solutions became homogenous.

**Example 11: Printing of Thin Strips for Tensile Tests**

Thin tensile film printing was carried out on a SL2 Viper SLA printer. For all the resins, $E_c = 5$ and $D_p = 4$. All formulations were overexposed at these settings to ensure that all green parts were well cured. The procedure was as follows:

(1) Cut the PET film into a square which fits the shape of the glass (size = 20.2 cm $\times$ 20.2cm ) and attach the PET film (size = 16 cm $\times$ 16 cm) to the glass using the double-sided tape.
(2) Select the 'elevator motion' and set the platform height to -3.7630.
(3) Using a pipette, apply around 2mL liquid onto the PET film
(4) Setting up $E_c$ and $D_p$
(5) Using the 5-mil side of applicator, slowly apply the first layer of film.
(6) When printing process gets into the pause period, use the 10-mil side of applicator to apply the second layer of film.
(7) Repeat printing and applying thin film until 30-mil side has been used, until a total of six layers of resin is printed.
(8) Once the printing is complete, carefully clear out the excess resin using tissues and remove the PET film.
(9) Depending on the print of the thin film, either peel off the thin films carefully or set the film aside for a minimum 30 minutes to allow dark cure and then try to peel the films off.
(10) If the films are still difficult to peel off, keep it aside for a longer period of time so that dark cure continues, and then try to peel the films off.
(11) Once the films have been peeled off the film, the thin films are placed in between pieces of glass and post-cured in the Dymax for 60 seconds on both sides.
(12) Test thin films following the ASTM D882 protocol which includes 7 days post conditioning at 23°C and 50% humidity. The average tensile data were list in above formulation table.

**Example 12: Characterizations of Hybrid Formulations**

Test methods

*Viscosity*

Viscosity of each blend in TABLE 8 was measured using a Brookfield DV-III+ viscometer with SC-27 spindle at room temperature. Each sample was measured at a certain RPM needed to achieve 50% torque range. Viscosity was measured in centipoise (cP) after temperature and sample stabilization was achieved (10 minutes).

*LED-DSC test*

A photo differential scanning calorimetry (DSC) with a customized 365-nm LED lamp setup was used. All photopolymerization rate measurement were performed using a Q2000 DSC unit from TA Instruments. A lamp holder for the DSC unit can be customized and printed from Arkema N3xtDimention® engineered resin N3D-TOUGH784 to ensure precise fit of a 365-nm lamp Accucure LTLM-2-365 from Digital Light Labs.

The LED light was automatically triggered by connecting the "Event" outlet of the DSC unit to an Accure Photo Rheometer Ultraviolet Illumination & Measurement System. LED light exposure can be programed by using "Event" on or off from Photo DSC software, but the intensity of light can be preset from the Accure Photo Rheometer Ultraviolet Illumination & Measurement System.

For measurement, approximately 5 mg of liquid sample is placed at the center of a T130522 DSC Tzero pan and is cured by exposing the sample to 50 mW/cm$^2$ of 365-nm LED light for 5 minutes under a 50 mL/min N$_2$ flow rate and 40 °C, followed by a second exposure under the same condition in order to determine and deduct the blank. The resulting heat flow (W/g) curve was collected to analyze maximum heat flow peak value and maximum peak time.

*LED-FTIR test*

A Real Time Fourier Transform Infrared (RT-FTIR) with an Attenuated Total Reflection (ATR) setup was used. All polymerization rate measurements were performed using Nicolet iS50 FT-IR Spectrometer from Thermo Scientific, equipped with a standard DLaTGS detector. A lamp holder for the ART platform of FTIR unit can be customized and printed from Arkema N3xtDimention® engineered resin N3D-TOUGH784 to ensure precise fit of a 365-nm lamp Accucure LTLM-2-365 lamp from Digital Light Labs. On the bottom of this lamp holder, a dry air channel is built in to allow air uniformly blowing over sample surface. The gas flow rate can be controlled over a rotameter. The LED light was manually triggered by Ultraviolet illumination & Measurement System. LED light exposure can be programed by AccuCure software. For the 385-nm lamp, Real time FTIR was performed at 385nm LED from Dymax LED light curing system at approximately 25% intensity and a consistent 2-inch height over sample surface, exposure time can be preset over its own controller and trigger manually.

For measurement, 25 μL of liquid sample is placed in the center of an ATR crystal. Then a 3-mil thin film was coated by a customized coating applicator (3-mil WFM, G1046 from BYK). The LED lamp with holder was places on the top of the ART platform. Then, the real time FTIR scan was initiated to collect IR spectrum. Once the liquid spectrum was collected, the controlled intensity of LED light source was turned on to start photopolymerization for a total of 100 seconds. Since the ring opening of both epoxide and oxetane generated C-O-C bond, the growth of C-O-C IR peak height at ~1087 cm$^{-1}$ was monitored. C-O-C peak height ratio to the reference peak height around 1727 cm$^{-1}$ was normalized from the equation C-O-C Peak ratio = R$_c$ - R$_{liq}$, where R$_{liq}$ is the peak height ratio of the liquid sample and R$_c$ is the peak height ratio of the LED cured sample.

An offline LED-FTIR can be performed over the same setup. At first, FTIR scan was initiated to collect liquid IR spectra. Each IR spectrum of a specific exposure time at a specific intensity of LED light was collected. Measurements of acrylate conversion were taken at the peak height under the reference peak around 1727 cm$^{-1}$; the acrylate peak at approximately 1407 cm$^{-1}$; the epoxide peak of UviCure S105 at approximately 790 cm$^{-1}$; and the oxetane peak of UViCure S 130 at approximately 970 cm$^{-1}$. The growth of C-O-C IR peak height at ~1087 cm$^{-1}$ was monitored as well.

The resulting of peak 1087 cm$^{-1}$ growth rate could be calculated to assess total cationic cure speed. Peak heights were determined using the same baseline, where a baseline is chosen to be the two lowest points between 600 cm$^{-1}$ and 1800 cm$^{-1}$. The peak height under the peak and above the baseline was then determined. The integration limits for liquid and the cured sample are not identical but are similar, especially for the reference peak.

The ratios of the acrylate peak height to the reference peak height, epoxide peak height to the reference peak height, and ring opening peak height to the reference peak height from both epoxide and oxetane were determined for both the liquid and the cured samples. Degree of cure or conversion or peak growth rate, expressed as percentage reacted acrylate or epoxide or ring opening of both epoxide and oxetane, was calculated from the equations below:

$$\text{Conversion (\%)} = [(R_{liq} - R_c) \times 100] / R_{liq}$$

$$\text{Peak growth rate (\%)} = [(R_c - R_{liq}) \times 100] / R_{liq}$$

Where R$_{liq}$ is the peak height ratio of the liquid sample and R$_c$ is the peak height ratio of the LED cured sample. The resulting acrylate and epoxide conversions or C-O-C growth rates were collected and plotted.

*Tensile test*

An Instron 5966 with load capacity of 10 kN with tensile testing fixtures is used to measure tensile properties. The thin strips are prepared for tensile properties. Six specimens are prepared for each sample, and the test speeds for tensile tests are set to 5 mm/min. The tests were conducted following the ASTM D882 protocol.

## Example 13: Analysis of Effect of Impurities on Liquid Stability and Cure Speed

In a typical preparation of multistage polymer particles, residual salts generally result from emulsifiers, surfactants such as potassium oleate and tetrasodium pyrophosphate used to prepare the multistage polymer particles. The aqueous solutions of these compounds are generally basic.

To a typical hybrid formulation, about 0.5% to 2% by weight of the additive solutions (A), (B), and (D) as described in Example 7 were added. After the formulations were stored at ambient and dark condition for 4 weeks, their viscosities increased and gelation and yellowing were observed. These observations were consistent with the basic-pH impurities being a cause of poor shelf life of a hybrid formulation.

For example, 0.5% of surfactant soup added to formulation D1 (see TABLE 6) gelled after 4 weeks. Loading was continuously lowered to 0.25% and 0.10% to evaluate cure performance. The results collected from 365-nm LED-DSC showed that bulk cure of the formulation was slowed in comparison with the same level of DI water. Similarly, as assessed by RT-FTIR cured by 50 mW/cm$^2$ of 365-nm LED, the total cationic cure was slowed in earlier light exposure, suggesting that even 0.1% surfactant soup in formulation could compromise the green strength of 3D printed parts.

The impurities or salts not only caused poor liquid stability but also slow down cationic cure. Without intent to be bound by theory, it is believed, therefore, that performance may be improved if the impurities derived from the surfactants could be removed by subjecting the multistage polymer particle to a dry washing process or a solvent-exchange process with acid.

## Example 14: Cure Speed of Dry Washed Multistage Polymer Particles (DW-MSP1)

MSP1 particles were washed three times by DI water by the procedure of Example 1 herein to obtain particles of DW-MSP1. The DW-MSP1 particles were mixed into a cationic formulation with UviCure S105/ UviCure S105/SC-938/SC-ITX = 77.4/19.4/3.0/0.2 to contain 10% by weight DW-MSP1 particles.

For analysis of cure speed, a 385-nm spot cure system was used for light exposure with 25% of intensity at 2 inches of consistent height over each sample surface. An offline FTIR test was conducted, which demonstrated that both epoxide and oxetane conversion of DW-MSP1 particles were improved at the earlier LED exposure. A further RT-FTIR test was conducted to observe a total cationic cure from growth of the C-O-C peak. The results confirmed that DW-MSP1 had greater cure speed than neat MSP1 at the earlier LED exposure. This observation was consistent with removal of contaminants in DW-MSP1 relative to MSP1 as a contributing factor for improved cure speed drying at an early stage of a cationic photopolymerization. Data are summarized in TABLE 7.

TABLE 7: Epoxide and oxetane conversion over time during photopolymerization of neat MSP1 and DW-MSP1

| Exposure Time (seconds) | Neat MSP1 | | DW-MSP1 | |
|---|---|---|---|---|
| | Epoxide | Oxetane | Epoxide | Oxetane |
| | Conversion (%) | Conversion (%) | Conversion (%) | Conversion (%) |
| 0 | 0.00 | 0.00 | 0.00 | 0.00 |
| 1 | 0.53 | 0.51 | 0.00 | 0.00 |
| 6 | 8.54 | 7.76 | 16.06 | 12.66 |
| 11 | 18.93 | 15.94 | 23.54 | 15.46 |
| 16 | 22.42 | 18.76 | 27.39 | 17.07 |
| 31 | 26.73 | 19.45 | 28.94 | 18.07 |
| 91 | 28.78 | 18.89 | 29.98 | 17.07 |

## Example 15: Cure Speed and Mechanical Properties of Wet-Washed Multistage Polymer Particles (MSP2)

Three test resin compositions including 20% by weight MSP2 particles in 80% by weight SR833S were prepared.

A first composition included MSP2 neat particles mixed into the SR833S. For a second composition (MSP2-SE) the mixture of the SR833S and MSP2 was prepared by the solvent-exchange process according to Example 3 herein. For a third composition (MSP2-SE-A) the mixture of the SR833S and MSP2 was prepared by the solvent-exchange process with 1% acetic acid wash according to Example 5 herein. A control formulation was prepared that contained no MSP2 particles.

To prepare the test formulations with neat MSP2, MSP2-SE, or MSP2-SE-A, 10% of the MSP2 was loaded into the main formulation. All formulations showed good storage stability at standard temperature and pressure conditions. The viscosity of the neat MSP2 sample was about 4 to 5 times greater than the viscosity of the control sample. The viscosity of the MSP2-SE sample was much less than that of the neat MSP2 sample. The viscosity of the MSP2-SE-A was significantly less than that of all other samples, including that of MSP2-SE.

Thin tensile film printing was carried out on SL2 Viper SLA printer from 3D Systems. For all the resins, $E_c = 5$ and $D_p = 4$. All formulations were overexposed at these settings, so that all green parts were well cured, post cured, and aged before the tensile test. Results showed that all of the formulations including MSP2 provided better tensile toughness or higher energy at break than the control formulation without the MSP2 without XT-152 (C1). The tensile toughness of the neat MSP2 sample and the MSP2-SE sample were about 10% greater and 20% greater than that of the control sample, respectively. The tensile toughness of the MSP-SE-A sample was about 50% greater than that of the control and about 25% greater than that of the MSP2-SE sample.

TABLE 8: Hybrid Formulations and Mechanical Characterizations

| Component | Compositions (wt.%) | | | |
|---|---|---|---|---|
| | Control with no MSP2 (comparative) | Neat MSP2 (comparative) | MSP2-SE | MSP2-SEA |
| UViCure S105 | 23.04 | 20.58 | 20.58 | 20.58 |
| UViCure S130 | 5.76 | 5.15 | 5.15 | 5.15 |
| SR833 S | 65 | 58.07 | 18.07 | 18.07 |
| MSP2 | - | 10 | - | - |
| SR833S + DW-MSP2 (80/20) | - | - | 50 | - |
| SR833S + MSP2-SE-A (80/20) | - | - | - | 50 |
| SC BKL | 2 | 2 | 2 | 2 |
| SC 938 | 4 | 4 | 4 | 4 |
| SC ITX | 0.2 | 0.2 | 0.2 | 0.2 |
| Properties | | | | |
| Viscosity @ 25 °C | 96 | 539 | 345 | 298 |
| Stability | No gelation | No gelation | No gelation | No gelation |
| Tensile Strength (MPa) | 39.8 ± 8.3 | 44 ± 9.2 | 48.2 ± 3.2 | 59.8 ± 1.4 |
| Elongation (%) | 1.9 ± 0.4 | 3.0 ± 1 | 3.3 ± 0.5 | 3.5 ± 0.27 |
| Modulus (MPa) | 2440 ± 109 | 1994 ± 29 | 1944 ± 110 | 2345 ± 60 |
| Energy @ Break (J) | 0.164 ± 0.1 | 0.288 ± 0.1 | 0.341 ± 0.1 | 0.46 ± 0.05 |

Each of four samples in TABLE 8 was exposed to 10 mW/cm$^2$, 365-nm of LED for 1 second, then 5 seconds under 10 L/min dry air, to collect FTIR peaks This test was repeated at least three times to collect the growth rate of the C-O-C peak. The C-O-C growth rate data are provided in TABLE 9.

TABLE 9: Comparison of C-O-C growth rates with respect to MSP2 contaminant-reduction process

| Composition MSP2 Component | Conversion (%) | Conversion (%) |
|---|---|---|
| | C=C Conversion (%) | C-O-C (Conversion (%) |
| Neat MSP2 | 45.2 | 240 |
| MSP2-SE | 53.2 | 251 |
| MSP2-SE-A | 51.4 | 321 |

Compared to the neat MSP2 formulation, the MSP2-SE formulation that was washed by water via the wet solvent-exchange process exhibited an improvement of 4.6% for total cationic cure, while the MSP2-SE-A formulation, including the solvent-exchange and 1 wt% acetic acid wash exhibited an improvement of 33.8% for total cationic cure. These observations are consistent with the likelihood that basic impurities present in MSP2 were effectively neutralized and removed by the acid wash and that the removal of the impurities resulted in faster cationic cure speed and significantly higher tensile toughness of the formulation.

### Example 16: Battery Coatings

To further evaluate the performance of multistage polymer particle curable compositions, three curable formulations were prepared that included a difunctional aliphatic urethane acrylate oligomer (CN991), isobornyl acrylate (SR506A), a trifunctional acid ester (SR9051), tricyclodecane dimethanol diacrylate (SR833S), titanium dioxide ($TiO_2$), and two different photoinitiators, including phenyl bis(2,4,6-trimethylbenzoyl)-phosphine oxide (SpeedCure BPO) and 2-hydroxy-2-methyl-1-phenylpropane (SpeedCure 73). A control formulation included the SR833S with no multistage polymer particles. A second formulation included the SR833S as a multistage polymer particle masterbatch of 80% by weight SR833S and 20% by weight hydrophobic MSP2-DP prepared by the dry powder process of Example 1. A third formulation included the SR833S as a multistage polymer particle masterbatch of 80% by weight SR833S and 20% by weight hydrophobic MSP2-SE prepared by the solvent exchange process of Example 3.

To prepare the curable compositions, difunctional aliphatic urethane acrylate oligomer (CN991) and titanium dioxide ($TiO_2$) were added to a Flacktek cup and mixed for 5 minutes at 2000 rpm in a Flacktek® DAC 400.2 VAC high-speed mixer. Then, a ball-milling was used for dispersing titanium dioxide pigments in aqueous media. After dispersion, isobornyl acrylate (SR506A), the tricyclodecane dimethanol diacrylate component (SR833S only, SR833S MSP2-DP masterbatch, or SR833S MSP2-SE masterbatch), trifunctional acid ester (SR9051), and photoinitiators were added to the mixture of oligomer and titanium dioxide and mixed again in a Flacktek cup for 5 minutes until the solution became homogenous. The formulations are summarized in TABLE 10.

TABLE 10: Components of Curable Base Formulations of this Example

| Component | Formulation | | |
|---|---|---|---|
| | SR833S only (comparative) | 80% SR833S; 20% MSP2-DP | 80% SR833S; 20% MSP2-SE |
| | wt.% | wt.% | wt.% |
| SR833S only | 30 | | |
| MSP2-DP masterbatch with SR833S (80% SR833S/20% MSP2) | | 30 | |
| MSP2-SE masterbatch with SR833S (80% SR833S/20% MSP2) | | | 30 |
| CN991 | 35 | 35 | 35 |
| SR9051 | 5 | 5 | 5 |
| SR506A | 23 | 23 | 23 |
| TiO$_2$ | 5 | 5 | 5 |
| Speedcure BPO | 1 | 1 | 1 |
| Speedcure 73 | 1 | 1 | 1 |

(continued)

| Component | Formulation | | |
|---|---|---|---|
| | SR833S only (comparative) | 80% SR833S; 20% MSP2-DP | 80% SR833S; 20% MSP2-SE |
| | wt.% | wt.% | wt.% |
| TOTAL | 100 | 100 | 100 |

## Coating and Curing Method

To prepare coatings, aluminum substrates were wiped with toluene in addition to acetone wipe. Samples were prepared with coating layers of three different thicknesses on an aluminum substrate using a drawdown bar. In a first set, the coating was applied as a single 30 $\mu$m layer. In a second set, the coating was applied as a single 60 $\mu$m layer. In a third set, the coating was applied as two 30 $\mu$m layers (total thickness 60 $\mu$m). The uncured resin coatings were cured using a LED light (395 nm) and fusion lamp (H bulb).

## Measurement Techniques

### Adhesion

The adhesion of the coated resins to the aluminum plate was evaluated according to ASTM Standard D3359 using crosshatch test. In this test, a blade was used to cut small squares to the surface of the coatings, cutting passes make six cuts in the coating, second passes at 90° makes a square lattice pattern. A transparent tape was applied over the patterned surface and was pulled off quickly to release the amount of coating lifted off by the test tape. The crosshatch is rated on a 0 to 5 scale (with 5 being the highest adhesion strength) provided in the ASTM standard.

### Flexibility

A conical mandrel test instrument was used to assess flexibility of the coatings in accordance with ASTM D522. The bend tester has a bending lever with a roller that pivots on a steel conical mandrel with a diameter ranging from 4 mm to 38 mm. The lever was used to bend the coated substrate over the conical cone. Then, each sample was checked for cracks or crazing.

### Volume Resistivity

To determine volume resistivity, the thickness of the cured samples was first measured using a Heidenhain Metro length gauge unit accurate within $\pm$ 0.2 m with a measuring range of 0 to 12 mm. Five different points in a 1.0 cm$^2$ area of coated samples on aluminum substrate were chosen for film thickness measurement, and their average was used for the volume resistivity input. Volume resistivity was measured using a Keithley 6517B and 8009 fixture at room temperature via the ASTM D-257 standard. An alternating polarity of 100 V was applied to the cured film for 10 seconds with a 20-$\mu$A current range prior to measurement to ensure a net zero charge.

### Pencil Hardness

Graphite pencils with varied hardness are moved across a coating surface to test the hardness of the coating via ASTM D3363-05. The softest pencil that will create a scratch on the surface of the coating determines its hardness in relation to graphite pencils.

## Characterizations

### Adhesion and hardness

The adhesion and hardness results for the three different resins and three distinct coating thicknesses on aluminum substrates are presented in TABLE 11 below. ASTM D3359 details the adhesion ranking scale based on the percent area removed, with 5 being 0% removal and 0 being greater than 65% removal.

TABLE 11: Cross-hatch adhesion and hardness of cured base formulations

| Cured Resin Component | Coating on aluminum substrate | Adhesion (cross hatch) | Pencil Hardness |
|---|---|---|---|
| SR833S only | 30 $\mu$m | 3 | H |
| | 60 $\mu$m-one layer- | 4 | 3H |
| | 60 $\mu$m-two layers | 5 | 4H |
| SR833S + MSP2-DP | 30 $\mu$m | 4 | 2H |
| | 60 $\mu$m-one layer- | 5 | 5H |
| | 60 $\mu$m-two layers | 5 | 6H |
| SR833S + MSP2-SE | 30 $\mu$m | 5 | 5H |
| | 60 $\mu$m-one layer- | 5 | 6H |
| | 60 $\mu$m-two layers | 5 | 7H |

The resin with MSP2-SE exhibits superior adhesion for a thickness of 30 $\mu$m and 60 $\mu$m-one layer compared to the control resin without multistage polymer particles. The resin with MSP2-SE has better adhesion than the resin with MSP2-DP for a thickness of 30 $\mu$m. The results showed also that by including the MSP2-SE, the hardness of the system was increased. Overall, the performance of the MSP2-SE resin outperformed that of the control resin and the MSP2-DP resin.

*Flexibility*

With regard to flexibility measurements with the conical mandrel, the control resin coatings passed the bend test for a thickness of 30 $\mu$m, failed for a thickness of 60 $\mu$m for one layer at diameters of less than 16 mm, and failed for a thickness of 60 $\mu$m for two layers. The addition of multistage polymer particle tougheners improved the flexibility in comparison to the control system. The system containing MSP2-DP passed flexibility for a thickness of 30 $\mu$m, failed at diameters of less than 6 mm for a thickness of 60 $\mu$m for one layer, and failed at diameters of less than 18 mm for a thickness of 60 $\mu$m for two layers. For the system containing MSP2-SE the coated sample with a thickness of 60 $\mu$m for two layers failed at diameters of less than 20 mm, whereas both coated samples with thicknesses of 30 $\mu$m and 60 $\mu$m for one layer displayed outstanding flexibility.

TABLE 12 includes the average measured volume resistivity for five different coated materials.

TABLE 12: Volume resistivity of cured coatings on aluminum substrates

| Cured Resin Component | Coating on Aluminum Substrate | Volume Resistivity ($10^{13}$ $\Omega\cdot$cm) | | | | | Avg Volume Resistivity ($10^{13}$ $\Omega\cdot$cm) |
|---|---|---|---|---|---|---|---|
| | | Film 1 | Film 2 | Film 3 | Film 4 | Film 5 | |
| SR833S only | 30 $\mu$m | 2.16 | 4.81 | 3.87 | 1.01 | 5.01 | 3.37 |
| | 60 $\mu$m-one layer- | 2.27 | 4.51 | 2.27 | 5.84 | 1.90 | 3.36 |
| | 60 $\mu$m-two layers | 0.52 | 5.42 | 1.55 | 4.76 | 5.44 | 3.54 |
| SR833S + MSP2-DP | 30 $\mu$m | 1.24 | 1.55 | 1.09 | 1.07 | 1.33 | 1.24 |
| | 60 $\mu$m-one layer- | 1.44 | 1.14 | 1.08 | 1.44 | 1.20 | 1.28 |
| | 60 $\mu$m-two layers | 1.08 | 1.05 | 1.41 | 1.38 | 1.80 | 1.23 |
| SR833S + MSP2-SE | 30 $\mu$m | 5.15 | 2.28 | 2.40 | 4.33 | 3.33 | 3.50 |
| | 60 $\mu$m-one layer- | 4.44 | 3.16 | 4.02 | 3.16 | 3.44 | 3.65 |
| | 60 $\mu$m-two layers | 1.01 | 2.82 | 7.13 | 5.42 | 2.71 | 3.82 |

All coatings exhibited very good volume resistivity, all on the order of $10^{13}$ $\Omega\cdot$cm. The volume resistivity of the MSP2-SE composition was greater than that of the MSP2-DP composition. Without intent to be bound by theory, it is believed that the greater volume resistivity for the MSP2-SE composition may result from cleaner multistage polymer product that the solvent exchange provides, compared to the dry powder process.

It is noted that the terms "substantially" and "about" may be utilized herein to represent the inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue. The term "substantially" is used herein also to represent the degree by which a quantitative representation may vary from a stated reference without resulting in a change in the basic function of the subject matter at issue. Thus, it is used to represent the inherent degree of uncertainty that may be attributed to any quantitative comparison, value, measurement, or other representation, referring to an arrangement of elements or features that, while in theory would be expected to exhibit exact correspondence or behavior, may in practice embody something less than exact.

Unless otherwise defined, all technical and scientific terms used herein have the same meaning as commonly understood by one of ordinary skill in the art to which the invention belongs. The terminology used in the description herein is for describing particular embodiments only and is not intended to be limiting. As used in the specification and appended claims, the singular forms "a," "an," and "the" are intended to include the plural forms as well, unless the context clearly indicates otherwise.

It is noted that one or more of the following claims utilize the term "wherein" as a transitional phrase. For the purposes of defining the present technology, it is noted that this term is introduced in the claims as an open-ended transitional phrase that is used to introduce a recitation of a series of characteristics of the structure and should be interpreted in like manner as the more commonly used open-ended preamble term "comprising."

It should be understood that where a first component is described as "comprising" or "including" a second component, it is contemplated that, in some embodiments, the first component "consists" or "consists essentially of" the second component. Additionally, the term "consisting essentially of" is used in this disclosure to refer to quantitative values that do not materially affect the basic and novel characteristic(s) of the disclosure.

It should be understood that any two quantitative values assigned to a property or measurement may constitute a range of that property or measurement, and all combinations of ranges formed from all stated quantitative values of a given property or measurement are contemplated in this disclosure.

While particular embodiments have been illustrated and described herein, it should be understood that various other changes and modifications may be made without departing from scope of the claimed subj ect matter. Moreover, although various aspects of the claimed subject matter have been described herein, such aspects need not be utilized in combination. It is therefore intended that the appended claims cover all such changes and modifications that are within the scope of the claimed subject matter.

**Claims**

1. A method for preparing a multistage polymer particle composition for curable formulations, the method comprising the following steps:

   subjecting multistage polymer particles to a contaminant-reduction process that reduces a level of at least one contaminant species present in the multistage polymer particles, the at least one contaminant species being selected from potassium, sodium, phosphorus, sulfur, or combinations thereof; and
   combining the multistage polymer particles with a photocurable component during or after the contaminant-reduction process;

   wherein:

   the multistage polymer particles comprise a core polymer, an inner shell polymer surrounding the core polymer, and an outer shell polymer surrounding the inner shell polymer;
   the core polymer has a glass transition temperature of less than 10 °C;
   the inner shell polymer has a glass transition temperature of at least 60 °C; and
   the outer shell polymer has a glass transition temperature of at least 30 °C.

2. The method of claim 1, wherein the contaminant-reduction process comprises the following steps:

   (a) adding an organic solvent to an aqueous dispersion comprising the multistage polymer particles and water, the organic solvent being at least partially miscible in the water;
   (b) adding an acid to the aqueous dispersion before or after adding the organic solvent to the aqueous dispersion in step (a), to obtain an acid-treated dispersion, the acid being chosen from organic acids or inorganic acids;

(c) increasing a ratio of the organic solvent to the water in the acid-treated dispersion at least once by removing liquids from the aqueous dispersion and subsequently replacing the liquids with additional portions of organic solvent to obtain an organic-solvent based dispersion; and
(d) removing the organic solvent and any residual water from the organic-solvent based dispersion,

wherein the multistage polymer particles are combined with the photocurable component after obtaining the organic-solvent based dispersion in (c) and before removing the organic solvent and any residual water in (d).

3. The method of claim 1, wherein the contaminant-reduction process comprises the following steps:

(a) wetting the multistage polymer particles to obtain an aqueous medium, the aqueous medium comprising deionized water and, optionally, an acid chosen from organic acids or inorganic acid;
(b) mixing the aqueous medium;
(c) allowing the aqueous medium to separate into a liquid phase and a solid phase;
(d) removing a portion of the liquid phase from the aqueous medium to obtain an aqueous slurry of the multistage polymer particles;
(e) repeating steps (a), (b), (c), and (d) at least once; and
(f) drying the aqueous slurry to obtain multistage polymer particles having a reduced level of the at least one contaminant species,

wherein the multistage polymer particles having a reduced level of the at least one contaminant species are combined with the photocurable component after drying the aqueous slurry in (f).

4. The method of any one of claims 1 to 3, wherein:

the core polymer comprises residues of monomers chosen from methyl acrylate, propyl acrylate, isopropyl acrylate, butyl acrylate, tert-butyl acrylate, methyl methacrylate, ethyl methacrylate, butyl methacrylate, isoprene, butadiene, combinations of the foregoing, or combinations of isoprene and butadiene with up to 98 wt% of a vinyl monomer chosen from styrene, alkylstyrene, acrylonitrile, or alkyl (meth)acrylate;
the inner shell polymer comprises residues of monomers chosen from methyl (meth)acrylate, ethyl (meth)acrylate, butyl (meth)acrylate, or combinations thereof; and
the outer shell polymer comprises residues of monomers chosen from alkyl (meth)acrylates, alkyl (meth)acrylate oxetanes, or alkyl (meth)acrylate epoxides.

5. The method of any one of claims 2 to 4, wherein the acid is chosen from carboxylic acids, alkanoic acids, organic boric acids, organic phosphonic acids, organic phosphoric acids, organic sulfonic acids, or combinations thereof.

6. The method of any one of claims 2 to 5, wherein the acid is chosen from lactic acid, acetic acid, formic acid, citric acid, oxalic acid, uric acid, malic acid, tartaric acid, (meth)acrylic acid, or combinations thereof.

7. The method of any one of claims 2, 4, 5, or 6, wherein adding the acid comprises combining from 30 parts to 70 parts by weight aqueous dispersion and from 70 parts to 30 parts by weight aqueous solution to obtain 100 parts by weight acid-treated dispersion, and wherein the aqueous solution comprises from 0.001% to 10% by weight of the acid, based on the total weight of the aqueous solution.

8. The method of any one of claims 2, 4, 5, 6, or 7, wherein the organic solvent is chosen from ketones, esters, ethers, acetals, alcohols, and combinations thereof.

9. The method of any one of claims 1 to 8, wherein:

the core polymer comprises a butadiene homopolymer or a butadiene copolymer;
the inner shell polymer comprises a copolymer of methyl methacrylate and divinyl benzene; and
the outer shell polymer comprises methyl methacrylate.

10. The method of any one of claims 1 to 8, wherein:

the outer shell polymer comprises monomer residues of at least one monomer having a Hansen solubility parameter polarity component $\delta_P$ less than 10.5 MPa$^{1/2}$; and

the photocurable component has a Hansen solubility parameter polarity component $\delta_P$ less than 10.5 MPa$^{1/2}$.

11. The method of claim 10, wherein:

the core polymer comprises residues of monomers chosen from methyl acrylate, propyl acrylate, isopropyl acrylate, butyl acrylate, tert-butyl acrylate, methyl methacrylate, ethyl methacrylate, butyl methacrylate, isoprene, butadiene, combinations of the foregoing, or combinations of isoprene and butadiene with up to 98 wt% of a vinyl monomer chosen from styrene, alkylstyrene, acrylonitrile, or alkyl (meth)acrylate;
the inner shell polymer comprises residues of monomers chosen from methyl (meth)acrylate, ethyl (meth)acrylate, butyl (meth)acrylate, or combinations thereof; and
the outer shell polymer comprises residues of monomers chosen from cyclohexyl (meth)acrylate, 4-tertbutyl cyclohexyl (meth)acrylate, bornyl (meth)acrylate, norbornyl (meth)acrylate, isobornyl acrylate, isobornyl (metha)crylate, fenchyl (meth)acrylate, dicyclopentanyl (meth)acrylate, dicyclopentenyl (meth)acrylate, adamantyl acrylate, adamantyl (meth)acrylate, dimethyl adamantyl (meth)acrylate, cyclodecyl acrylate, cyclodecyl (meth)acrylate, or combinations thereof.

12. The method of claim 10 or 11, wherein:

the core polymer comprises a butadiene homopolymer or a butadiene copolymer;
the inner shell polymer comprises a copolymer of methyl methacrylate and divinyl benzene; and
the outer shell polymer comprises isobornyl methacrylate.

13. The method of any one of claims 1 to 12, wherein the photocurable component comprises at least one photocurable monomer or oligomer chosen from (meth)acrylate monomers, (meth)acrylate oligomers, ethylenically unsaturated compounds other than (meth)acrylates, oxetanes, epoxides, cationically polymerizable alcohols, cationically polymerizable vinyl ethers, and combinations thereof.

14. A curable formulation comprising:

from 1% to 40% by weight multistage polymer particle composition prepared according to the method of any one the preceding claims;
from 5% to 99% by weight of at least one cationically curable monomer;
a cationic photoinitiator;
optionally, from 5% to 90% by weight of at least one (meth)acrylate monomer or oligomer; and
optionally, at least one radical photoinitiator;
wherein the percentages by weight are based on the weight of the curable formulation.

15. A method of making a three-dimensional article, the method comprising printing the three-dimensional article using a curable formulation according to claim 14 in a layer-by-layer or continuous manner.

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/001835 A1 (ARKEMA FRANCE [FR]) 2 January 2020 (2020-01-02) | 1,3-15 | INV. C08F6/00 |
| Y | * aspects 1, 2, 10, 28 and 29; | 1,3-15 | C08F6/02 |
| A | page 2, line 21 - page 3, line 18; claim 2 * | 2 | C08F6/06 |
| | * page 21, line 8 - line 32 * | | |
| | * page 23, line 32 - page 24, line 5 * | | |
| | * page 28, line 15 - page 30, line 5 * | | |
| | * page 45, line 14 - line 25 * ----- | | |
| X | WO 2021/105508 A1 (ARKEMA FRANCE [FR]) 3 June 2021 (2021-06-03) | 1,3-15 | |
| Y | * paragraph [0030]; claim 18 * | 1,3-15 | |
| A | ----- | 2 | |
| X | WO 2019/012088 A1 (ARKEMA FRANCE [FR]) 17 January 2019 (2019-01-17) | 1,3-15 | |
| Y | * paragraph [0078]; claim 25 * | 1,3-15 | |
| A | ----- | 2 | |
| Y | US 2017/355802 A1 (NAVARRO CHRISTOPHE [FR] ET AL) 14 December 2017 (2017-12-14) | 1,3-15 | TECHNICAL FIELDS SEARCHED (IPC) |
| A | * paragraph [0012] * ----- | 2 | C08F C09D |
| Y | WO 2016/102666 A1 (ARKEMA FRANCE [FR]) 30 June 2016 (2016-06-30) | 1,3-15 | |
| A | * paragraph [0149] * ----- | 2 | |

The present search report has been drawn up for all claims

| Place of search | Date of completion of the search | Examiner |
|---|---|---|
| Munich | 17 May 2023 | Gold, Josef |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 22 30 7078

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2023

| Patent document cited in search report | Publication date | Patent family member(s) | Publication date |
|---|---|---|---|
| WO 2020001835 A1 | 02-01-2020 | CN 112334503 A | 05-02-2021 |
| | | EP 3814392 A1 | 05-05-2021 |
| | | IL 279630 A | 01-03-2021 |
| | | JP 2021529115 A | 28-10-2021 |
| | | TW 202000780 A | 01-01-2020 |
| | | US 2021171760 A1 | 10-06-2021 |
| | | WO 2020001835 A1 | 02-01-2020 |
| WO 2021105508 A1 | 03-06-2021 | AU 2020394556 A1 | 26-05-2022 |
| | | CN 114981328 A | 30-08-2022 |
| | | EP 4065620 A1 | 05-10-2022 |
| | | FR 3103817 A1 | 04-06-2021 |
| | | JP 2023503984 A | 01-02-2023 |
| | | KR 20220111287 A | 09-08-2022 |
| | | US 2022411544 A1 | 29-12-2022 |
| | | WO 2021105508 A1 | 03-06-2021 |
| WO 2019012088 A1 | 17-01-2019 | CN 110832044 A | 21-02-2020 |
| | | EP 3652262 A1 | 20-05-2020 |
| | | FR 3068979 A1 | 18-01-2019 |
| | | JP 2020527621 A | 10-09-2020 |
| | | KR 20200027997 A | 13-03-2020 |
| | | SG 11201912605W A | 30-01-2020 |
| | | US 2020216717 A1 | 09-07-2020 |
| | | US 2022363949 A1 | 17-11-2022 |
| | | WO 2019012088 A1 | 17-01-2019 |
| US 2017355802 A1 | 14-12-2017 | BR 112017010685 A2 | 14-02-2018 |
| | | CN 107075044 A | 18-08-2017 |
| | | EP 3224289 A1 | 04-10-2017 |
| | | FR 3028859 A1 | 27-05-2016 |
| | | JP 2017538814 A | 28-12-2017 |
| | | KR 20170087922 A | 31-07-2017 |
| | | RU 2017121983 A | 26-12-2018 |
| | | SG 11201704039X A | 29-06-2017 |
| | | US 2017355802 A1 | 14-12-2017 |
| | | WO 2016083383 A1 | 02-06-2016 |
| WO 2016102666 A1 | 30-06-2016 | BR 112017013691 A2 | 13-03-2018 |
| | | CN 107250260 A | 13-10-2017 |
| | | EP 3237500 A1 | 01-11-2017 |
| | | FR 3031108 A1 | 01-07-2016 |
| | | JP 7260247 B2 | 18-04-2023 |
| | | JP 2018500441 A | 11-01-2018 |
| | | KR 20170098913 A | 30-08-2017 |
| | | RU 2017126213 A | 24-01-2019 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 22 30 7078

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2023

| Patent document cited in search report | Publication date | Patent family member(s) | Publication date |
|---|---|---|---|
| | | SG 11201705040Q A | 28-07-2017 |
| | | US 2018002520 A1 | 04-01-2018 |
| | | WO 2016102666 A1 | 30-06-2016 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100222512 A1
- US 3835003 A
- US 5750590 A
- US 5674922 A
- US 5981616 A
- US 6469108 B
- US 6015914 A

**Non-patent literature cited in the description**

- **CHARLES HANSEN.** Hansen Solubility Parameters: A user's handbook. CRC Press, 2007